(19)

**Europäisches Patentamt**
**European Patent Office**
**Office européen des brevets**

(11) **EP 4 482 222 A1**

(12) **EUROPEAN PATENT APPLICATION**
published in accordance with Art. 153(4) EPC

(43) Date of publication:
**25.12.2024 Bulletin 2024/52**

(51) International Patent Classification (IPC):
*H04W 52/02* (2009.01)      *H04W 72/23* (2023.01)
*H04W 88/08* (2009.01)

(21) Application number: **23796883.9**

(52) Cooperative Patent Classification (CPC):
**H04W 52/02; H04W 72/23; H04W 88/08**

(22) Date of filing: **28.04.2023**

(86) International application number:
**PCT/KR2023/005870**

(87) International publication number:
**WO 2023/211244 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022  KR 20220052452**

(71) Applicant: **Samsung Electronics Co., Ltd.
Gyeonggi-do, 16677 (KR)**

(72) Inventors:
• **YANG, Hyewon**
  **Suwon-si, Gyeonggi-do 16677 (KR)**
• **KIM, Youngbum**
  **Suwon-si, Gyeonggi-do 16677 (KR)**
• **YI, Junyung**
  **Suwon-si, Gyeonggi-do 16677 (KR)**
• **SHIN, Cheolkyu**
  **Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR REDUCING BASE STATION ENERGY CONSUMPTION IN WIRELESS COMMUNICATION SYSTEM**

(57)     The present disclosure relates to a 5G or 6G communication system for supporting a higher data transmission rate. In addition, the present disclosure provides a method and a device for reducing energy consumption of a base station in a mobile communication system. According to the present disclosure, an excessive energy consumption problem of a base station in a mobile communication system is resolved, and higher energy efficiency can be achieved. The method performed by a base station in a communication system, according to one embodiment of the present disclosure, may comprise the steps of: determining a conversion from a first state to a second state; transmitting, to a terminal, first state conversion information indicating the conversion from the first state to the second state; converting the state of the base station from the first state to the second state; and performing communication with the terminal on the basis of the second state.

FIG. 5

**Description**

**[Technical Field]**

The disclosure relates to a method and an apparatus for reducing energy consumption of a base station in a wireless communication system.

**[Background Art]**

A 5G mobile communication technology defines wide frequency bands to allow a fast transmission rate and a new service, and can be implemented not only in a frequency band equal to or lower than 6 GHz ('sub 6GHz') such as 3.5 gigahertz (GHz) but also in an ultra-higher frequency band ('above 6GHz') called a millimeter wave (mmWave) such as 28 GHz and 39 GHz. Further, in the case of a 6G mobile communication technology called a system after 5G communication (beyond 5G), implementation in a terahertz band (for example, a band from 95 GHz to 3 terahertz (THz)) is considered to achieve a transmission rate 50 times faster than the 5G mobile communication technology and ultra-low latency one-tenth of the 5G mobile communication technology.

At the beginning of 5G mobile communication technology, for the purposes of supporting services and satisfying performance requirements for enhanced mobile broadband (eMBB), ultra-reliable low-latency communications (URLLC) and massive machine-type communications (mMTC), the standardization has been progressed for beamforming and massive multiple-input multiple-output (Massive MIMO) for mitigating propagation path loss and increasing a propagation arrival distance in an ultra-high frequency band, supporting of various numerologies for efficiently using ultra-high frequency resources (operation of a plurality of subcarrier spacings and the like), and the dynamic operation of slot formats, initial access technology for supporting multi-beam transmission and a broadband, the definition and operation of a band-width part (BWP), a new channel coding method such as a low density parity check (LDPC) code for large-capacity data transmission and a polar code for high-reliable transmission of control information, L2 pre-processing, network slicing that provides a dedicated network specialized for a specific service, and the like.

Currently, the discussion on the improvement of initial 5G mobile communication technology and performance enhancement thereof is being conducted in consideration of services that the 5G mobile communication technology intended to support, and the physical layer standardization is being progressed for vehicle-to-everything (V2X) for helping an autonomous vehicle in driving determination, based on location and state information that the vehicle transmits, so as to increase convenience of the user, new radio unlicensed (NR-U) that aims at a system operation meeting requirements according to various regulations in an unlicensed band, NR UE low power consumption technology (UE power saving), a non-terrestrial network (NTN) corresponding to direct communication between the UE and a satellite for securing the coverage in an area in which communication with a terrestrial network is not possible, location measurement (positioning), and the like.

Further, the standardization is also being progressed for wireless interface architecture/protocol fields for technology such as an intelligent factory (industrial Internet of things (IIoT)) for supporting a new service through interworking and convergence with other industrials, an integrated access and backhaul (IAB) that provides a node for expanding a network service area by integratively supporting a wireless backhaul link and an access link, mobility enhancement technology including conditional handover and dual active protocol stack (DAPS) handover, and 2-step random access (2-step RACH for NR) that simplifies a random access procedure. There also has been ongoing standardization in system architecture/service fields regarding a 5G baseline architecture (for example, service-based architecture or service-based interface) for combining network functions virtualization (NFV) and software-defined networking (SDN) technology, and mobile edge computing (MEC) that receives a service, based on the UE location, and the like.

When the 5G mobile communication system is commercialized, connected devices which are growing explosively will be connected to a communication network, and accordingly, it is expected to enhance functions and performance of the 5G mobile communication system and need an integrated operation of the connected devices. To this end, new research is scheduled to be conducted on extended reality (XR) for efficiently supporting augmented reality (AR), virtual reality (VR), mixed reality (MR), and the like, improvement of the performance and reduction in complexity for 5G using artificial intelligence (AI) and machine learning (ML), supporting of an AI service, supporting of a metaverse service, drone communication, and the like.

Further, the development of the 5G mobile communication system may be the basis for the development of not only a new waveform for securing the coverage in a terahertz band of 6G mobile communication technology, full dimensional MIMO (FD-MIMO), an array antenna, multi-antenna transmission technology such as a large-scale antenna, metamaterial-based lens and antenna for improving the coverage of a terahertz band signal, high-dimensional spatial multiplexing technology using orbital angular momentum (OAM), and reconfigurable intelligent surface (RIS) technology, but also full duplex technology for enhancing frequency efficiency and improving a system network of the 6G mobile communication technology, a satellite, AI-based communication technology that uses artificial intelligence (AI) from the design stage and internalizing an end-to-end AI support function, so as to implement system optimization, next-generation distribution computing technology that realizes a service having complexity exceeding the limits of UE calculation capabilities by using ultra-high performance communication and computing resources.

## [Disclosure of Invention]

## [Technical Problem]

Based on the discussion, the disclosure provides a method and an apparatus for reducing energy consumption of a base station (BS) in a mobile communication system.

## [Solution to Problem]

A method performed by a base station (BS) in a communication system according to an embodiment of the disclosure to solve the technical problem may include determining a switching from a first state to a second state, transmitting first state switching information indicating the switching from the first state to the second state to a UE, switching a state of the BS from the first state to the second state, and performing communication with the UE, based on the second state.

A method performed by a UE in a communication system according to an embodiment of the disclosure may include receiving first state switching information indicating a switching from a first state to the second state from a base station (BS) and performing communication with the BS, based on the second state.

A base station (BS) in a communication system according to an embodiment of the disclosure may include a transceiver and a controller configured to determine a switching from a first state to a second state, transmit first state switching information indicating the switching from the first state to the second state to a UE, switch a state of the BS from the first state to the second state, and perform communication with the UE, based on the second state.

A UE in a communication system according to an embodiment of the disclosure may include a transceiver and a controller configured to receive first state switching information indicating a switching from a first state to the second state from a base station and perform communication with the base station (BS), based on the second state.

## [Advantageous Effects of Invention]

According to an embodiment of the disclosure, it is possible to solve an excessive energy consumption problem and achieve high energy efficiency by defining a signal transmission method of the BS in a mobile communication system.

## [Brief Description of Drawings]

FIG. 1 illustrates an example of the basic structure of time-frequency resource domains in a 5G system.
FIG. 2 illustrates an example of a time domain mapping structure of a synchronization signal and a sweeping operation.
FIG. 3 illustrates an example of a random access procedure.
FIG. 4 illustrates an example of a procedure in which a UE reports UE capability information to a gNB.
FIG. 5 illustrates an example of state switching of the BS and the UE and a relationship diagram of a UE state according to a BS state.
FIG. 6 illustrates an example of a BS procedure when the BS switches from the OFF state to the NORMAL state or the SLEEP state.
FIG. 7 illustrates an example of a BS procedure when the BS switches from the NORMAL state or the SLEEP state to the OFF state.
FIG. 8 illustrates an example of a BS procedure when the BS switches from the SLEEP state to the NORMAL state
FIG. 9 illustrates an example of a BS procedure when the BS switches from the NORMAL state to the SLEEP state
FIG. 10 illustrates an example of a procedure in which the UE acquires system information of the BS through a SIB.
FIG. 11 illustrates an example of a UE operation when signaling of switching a BS state is performed.
FIG. 12 illustrates an example of a BS operation in a sleep mode in which a DTRX operation is configured.
FIG. 13 illustrates an example of an operation of periodically switching sleep modes supported by the BS.
FIG. 14 illustrates a UE transmission and reception device according to an embodiment of the disclosure.
FIG. 15 is a block diagram illustrating an example of a configuration of the UE according to an embodiment of the disclosure.

FIG. 16 is a block diagram illustrating an example of a configuration of the BS according to an embodiment of the disclosure.

**[Mode for the Invention]**

Hereinafter, embodiments of the disclosure are described in detail with reference to the accompanying drawings. Further, in description of the disclosure, when it is determined that detailed description for related known functions or configurations may unnecessarily obscure the subject matter of the disclosure, the detailed description will be omitted. Furthermore, the following terms are defined in consideration of the functions in the disclosure, which may vary depending on the intention or practice of a user, an operator, or the like. Therefore, the definitions of the terms should be made based on the contents throughout the specification.

Advantages and features of the disclosure and methods of achieving the same will become clear with reference to the accompanying drawings and embodiments described below in detail. However, the disclosure is not limited to the embodiments disclosed below but can be implemented in various different forms. The embodiments are provided to merely make the disclosure complete and completely inform those skilled in the art to which the disclosure belongs of the scope of the disclosure, and the disclosure is merely defined by the scope of the claims. Throughout the specification, the same reference numeral indicates the same component.

It may be understood that each block in drawings corresponding to processing flowcharts and combinations of the drawings corresponding to the flowcharts can be performed by computer program instructions. Since these computer program instructions can be installed in a processor for a general-purpose computer, special-purpose computer, or other programmable data processing apparatuses, the instructions which are executed via the processor of the computer or other programmable data processing apparatuses generate a means for performing the functions specified in the flowchart block(s). Since these computer program instructions can also be stored in a computer-available or computer-readable memory that can direct a computer or other programmable data processing apparatuses in order to implement functions in a particular manner, the instructions stored in the computer-available or computer-readable memory can generate manufactured items including an instruction means which performs the functions specified in the flowchart block(s). Since the computer program instructions can be installed in a computer or other programmable data processing apparatuses, a series of operational steps may be performed in the computer or other programmable data processing apparatuses to generate a process performed by the computer, and thus the instructions which execute the computer or other programmable data processing apparatuses can provide steps for performing the functions specified in the flowchart block(s).

Further, each block may represent a module, a segment, or a portion of code, which includes one or more executable instructions for performing the specified logical function(s). In addition, in some alternative implementations, it should be noted that the functions mentioned in the blocks can occur out of the order. For example, two blocks shown in succession can, in fact, be executed substantially concurrently, or the blocks can sometimes be executed in the reverse order, depending upon the function involved.

The term "~er" used in the embodiments refers to a software or hardware component such as a field-programmable gate array (FPGA) or an application-specific integrated circuit (ASIC), and the "~er" may play any roles. However, the '~er' is not limited to software or hardware. The "~er" may be constituted in an addressable storage medium or constructed to reproduce one or more processors. Accordingly, for example, the "~er" includes software components, object-oriented software components, components such as class components and task components, processors, functions, attributes, procedures, subroutines, segments of program code, drivers, firmware, microcode, a circuit, data, a database, data structures, tables, arrays, and parameters. Functions provided within the components and the "~ers" may be combined into a fewer number of components and "~ers" or more divided into additional components and "~ers". In addition, the components and the '~ers' may be implemented to reproduce one or more CPUs within a device or a secure multimedia card. In embodiments, the "~er" may include one or more processors.

In the following description of the disclosure, when it is determined that detailed description for related known functions or configurations may unnecessarily obscure the subject matter of the disclosure, the detailed description will be omitted. Hereinafter, embodiments of the disclosure are described with reference to the accompanying drawings.

Terms for identifying access nodes used in the following description, terms referring to network entities, terms referring to messages, terms referring to interfaces between network entities, terms referring to various pieces of identification information, and the like are used for convenience of description. Accordingly, the disclosure is not limited to the following terms, and other terms referring to a target having the equivalent technical meaning may be used.

In the following description, a physical channel and a signal may be interchangeably used with data or a control signal. For example, a physical downlink shared channel (PDSCH) is a term referring to a physical channel for transmitting data, but the PDSCH may be used to refer to data. That is, in the disclosure, the expression "transmit a physical channel" may be interpreted equivalently to the expression "transmit data or a signal through a physical channel".

Hereinafter, in the disclosure, higher-layer signaling refers to a method of transmitting a signal from a BS to a UE through a downlink data channel of a physical layer or from a UE to a BS through an uplink data channel of a physical layer. Higher-layer signaling may be understood as radio resource control (RRC) signaling or a media access control (MAC) control element (CE).

Hereinafter, for convenience of description, the disclosure uses terms and names defined in the 3GPP new radio (NR: 5th-generation mobile communication standard) standard. However, the disclosure is not limited by the terms and names, and may be equally applied to a system that is based on another standard. Further, the term UE may indicate not only mobile phones, smartphones, IoT devices, and sensors but also other wireless communication devices.

Hereinafter, a BS is the entity that allocates resources to a UE, and may be at least one of a gNode B, a gNB, an eNode B, an eNB, a Node B, a base station (BS), a radio access unit, a BS controller, or a node in the network. The terminal may include a user equipment (UE), a mobile station (MS), a cellular phone, a smart phone, a computer, or a multimedia system capable of performing a communication function. Of course, the disclosure is not limited to the example.

In order to process the recent explosive increase in mobile data traffic, the initial standard of 5th generation (5G) system or new radio (NR) access technology after long-term evolution (LTE or evolved universal terrestrial radio access (E-UTRA)) and LTE-advanced (LTE-A or E-UTRA evolution) has been completed. While the conventional mobile communication system focuses on general voice/data communication, the 5G system aims at meeting requirements and various services such as an enhanced mobile broadband (eMBB) service for enhancement of the conventional voice/data communication, an ultra-reliable and low latency communication (URLLC) service, a massive machine type communication (MTC) service supporting massive object communication, and the like.

While a system transmission bandwidth per single carrier in conventional LTE and LTE-A is limited to a maximum of 20 MHz, the 5G system mainly aims at a ultra-highspeed data service reaching several Gbps using an ultra-wide bandwidth which is significantly wider than LTE and LTE-A. Accordingly, the 5G system considers, as a candidate frequency, an ultra-high-frequency band from several GHz in which guaranteeing an ultra-wide bandwidth frequency is relatively easy to a maximum of 100 GHz. In addition, it is possible to secure a wide bandwidth frequency for the 5G system through frequency reallocation or allocation among frequency bands included in hundreds of MHz to several GHz used in the conventional mobile communication system.

A radio wave in the ultra-high frequency band has a wavelength of several mm and is also called a millimeter wave (mmWave). However, since a propagation pathloss increases in proportion to a frequency band in the ultra-high frequency band, the coverage of the mobile communication system becomes smaller.

In order to remove the disadvantage of the decreased coverage of the ultra-high-frequency band, a beamforming technology for increasing a propagation arrival distance by concentrating the radiant energy of radio waves on a predetermined target point through a plurality of antennas is applied. That is, signals to which the beamforming technology is applied have a relatively narrower beam width, and the propagation arrival distance increases since the radiant energy is concentrated within the narrowed beam width. The beamforming technology may be applied to each of a transmitting side and a receiving side. The beamforming technology has not only a coverage increase effect but also an effect of reducing interference in areas out of the beamforming direction. A method of accurately measuring and feeding back transmission/reception beams is needed to properly operate the beamforming technology. The beamforming technology may be applied to a control channel or a data channel that corresponds one-to-one between a predetermined UE and a BS. Further, in order to increase the coverage, the beamforming technology may be applied to a common signal which the BS transmits to a plurality of UEs within the system, for example, a synchronization signal, a broadcast channel (physical broadcast channel (PBCH)), and a control channel and data channel for transmitting system information. When the beamforming technology is applied to the common signal, a beam-sweeping technology for changing a beam direction and transmitting a signal may be additionally applied, and thus the common signal may reach UEs positioned at a predetermined location within the cell.

Another requirement of the 5G system is an ultra-low latency service having a transmission delay between transmission and reception sides which is around about 1 ms. In order to reduce the transmission delay, it is required to design a frame structure based on a short transmission time interval (short TTI) compared to LTE and LTE-A. The TTI is a basic time unit for performing scheduling, and the TTI in the conventional LTE and LTE-A systems is 1 ms, corresponding to one subframe length. For example, as the short TTI to meet requirements of the ultra-low-latency service of the 5G system, TTIs of 0.5 ms, 0.25 ms, 0.125 ms, and the like, shorter than that of the conventional LTE and LTE-A systems, are possible.

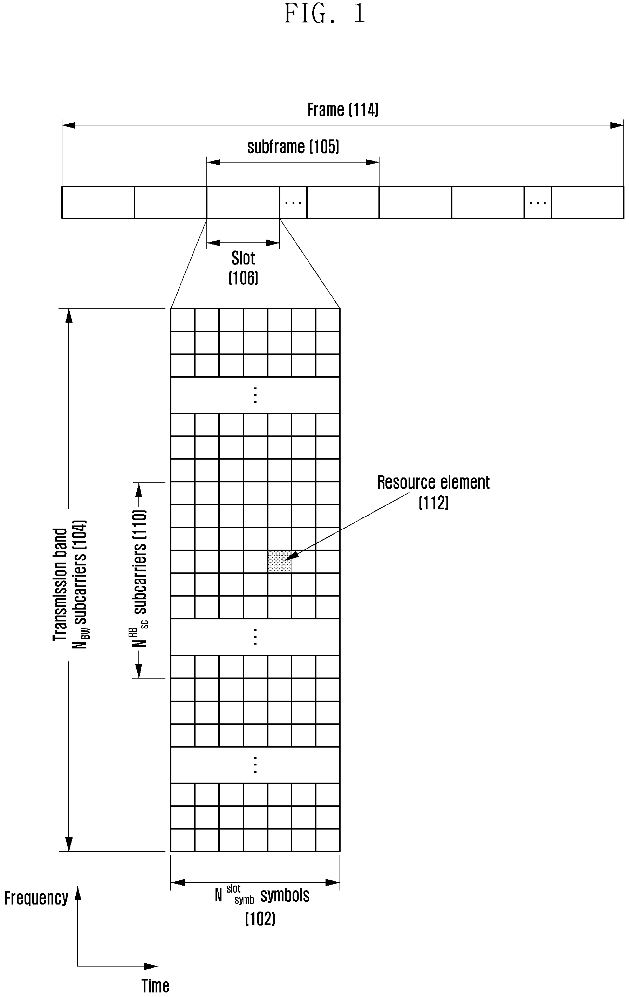

FIG. 1 illustrates an example of the basic structure of time-frequency resource domains in a 5G system. That is, FIG. 1 illustrates the basic structure of time-frequency resource domains corresponding to radio resource areas in which data or control channels are transmitted in the 5G system.

Referring to FIG. 1, a horizontal axis is a time domain and a vertical axis is a frequency domain in FIG. 1. A minimum transmission unit in the time domain of the 5G system is an orthogonal frequency division multiplexing (OFDM) symbol, $N_{symb}^{slot}$ symbols 102 may constitute one slot 106, and $N_{slot}^{subframe}$ slots may constitute one subframe 105. The length of the subframe may be 1.0 ms, and 10 subframes may constitute a frame 114 of 10 ms. A minimum transmission unit in the frequency domain is a subcarrier, and the bandwidth of an entire system transmission band (transmission bandwidth) may be constituted by a total of $N_{BW}$ subcarriers 104.

A basic unit of resources in the time-frequency domain is a resource element (RE) 112 and may be indicated by an OFDM symbol index and a subcarrier index. A resource block (RB or physical resource block (PRB)) may be defined as $N_{sc}^{RB}$ consecutive subcarriers 110 in the frequency domain. In the 5G system, $N_{sc}^{RB} = 12$ and a data rate may increase in proportion to the number of RBs scheduled in the UE.

In the 5G system, the BS may map data in units of RBs and generally schedule RBs that constitute one slot for a predetermined UE. That is, a basic time unit for scheduling in the 5G system may be a slot, and a basic frequency unit for scheduling may be an RB.

The number $N_{symb}^{slot}$ of OFDM symbols is defined according to the length of a cyclic prefix (CP) added to every symbol to prevent interference between symbols and, for example, $N_{symb}^{slot} = 14$ when a normal CP is applied, and $N_{symb}^{slot} = 12$ when an extended CP is applied. The extended CP may maintain orthogonality between symbols since the extended CP is applied to a system having a relatively longer propagation transmission distance than the normal CP. In the case of the normal CP, a ratio between the CP length and the symbol length is maintained as a predetermined value, and thus overhead due to the CP may be constantly maintained regardless of subcarrier spacing. That is, when the subcarrier spacing is small, the symbol length becomes longer, and accordingly, the CP length may become longer. Contrary to this, when the subcarrier spacing is large, the symbol length becomes shorter, and accordingly, the CP length may become shorter. The symbol length and the CP length may be inversely proportional to the subcarrier spacing.

In order to meet various services and requirements, various frame structures may be supported through the control of subcarrier spacing in the 5G system. For example,

- In a viewpoint of an operation frequency band, it is advantageous to reconstruct phase noise of a high-frequency band as subcarrier spacing is larger.
- In a viewpoint of a transmission time, when subcarrier spacing is large, the symbol length in the time domain becomes shorter, and as a result, the slot length becomes shorter, and thus it is advantageous to support an ultra low latency service like URLLC.
- In a viewpoint of a cell size, a larger cell can be supported as the CP length is longer, and thus a relatively large cell may be supported as subcarrier spacing is smaller. A cell is the concept indicating an area managed by one BS in mobile communication.

The subcarrier spacing and the CP length are information necessary for OFDM transmission and reception, and seamless transmission and reception are possible only when the BS and the UE recognize the subcarrier spacing and the CP length as common values. [Table 1] shows the relationship between a subcarrier spacing configuration μ, subcarrier spacing $f$, and the CP length, supported by the 5G system.

[Table 1]

| μ | $\Delta f = 2^{\mu} \cdot 15$ **[kHz]** | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] shows the number $N_{symb}^{slot}$ of symbols per slot, the number $N_{slot}^{frame,\mu}$ of slots per frame, and the number $N_{slot}^{subframe,\mu}$ of slots per subframe in each subcarrier spacing configuration μ in the case of the normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3] shows the number $N_{symb}^{slot}$ of symbols per slot, the number $N_{slot}^{frame,\mu}$ of slots per frame, and the number $N_{slot}^{subframe,\mu}$ of slots per subframe in each subcarrier spacing configuration $\mu$ in the case of the extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

When the 5G system is initially introduced, it is expected to coexist with at least the conventional LTE and/or LTE-A (hereinafter, LTE/LTE-A) systems or operate in a dual mode. Accordingly, the existing LTE/LTE-A may serve to provide stable system operations to the UE, and the 5G system may serve to provide improved services to the UE. Therefore, the frame structure of the 5G system needs to include at least the frame structure of LTE/LTE-A or a necessary parameter set (subcarrier spacing = 15 kHz).

For example, in comparison between the frame structure in which the subcarrier spacing configuration $\mu=0$ (hereinafter, referred to a frame structure A) and the frame structure in which the subcarrier spacing configuration $\mu=1$ (hereinafter, referred to as a frame structure B), the frame structure B shows that the subcarrier spacing and the RB size are twice as large and the slot length and the symbol length are twice as small as the frame structure A. In the case of the frame structure B, two slots constitute one subframe, and twenty subframes constitute one frame.

When the frame structure of the 5G system is generalized, the subcarrier spacing, the CP length, and the slot length that correspond to the necessary parameter set have the relation of an integer multiple for each frame structure, thereby providing high expandability. In order to indicate a reference time unit irrelevant to the frame structure, a subframe having the fixed length of 1 ms may be defined.

The frame structures may be applied to correspond to various scenario. In a viewpoint of the cell size, a larger cell can be supported as the CP length is longer, so that frame structure A may support a relatively larger cell than frame structure B. In a viewpoint of the operation frequency band, longer subcarrier spacing is advantageous for reconstruction of phase noise of a high-frequency band, and thus frame structure B may support a relatively higher operation frequency than frame structure A. In a viewpoint of the service, as the slot length, which is the basic time unit of scheduling, is shorter, it is more advantageous to support an ultra-low-latency service like URLLC, so that the frame structure B is relatively more suitable for the URLLC service than the frame structure A.

In the following description of the disclosure, an uplink (UL) may indicate a radio link through which the UE transmits data or a control signal to the BS and a downlink (DL) may indicate a radio link through which the BS transmits a data or a control signal to the UE.

In an initial access step in which the UE initially accesses the system, the UE may synchronize the downlink time and frequency on the basis of a synchronization signal transmitted by the BS through a cell search and acquire a cell ID. The UE may receive a physical broadcast channel (PBCH) by using the acquired cell ID and acquire a master information block (MIB) that is necessary system information from the PBCH. In addition, the UE may receive a system information block (SIB) transmitted by the BS and acquire cell common transmission and reception-related control information. The cell common transmission and reception-related control information may include random access-related control information, paging-related control information, and common control information for various physical channels.

A synchronization signal is a signal that is a reference of a cell search, and subcarrier spacing may be applied to fit a channel environment such as phase noise in each frequency band. In the case of a data channel or a control channel, the subcarrier spacing may be differently applied according to a service type in order to support various services as described above.

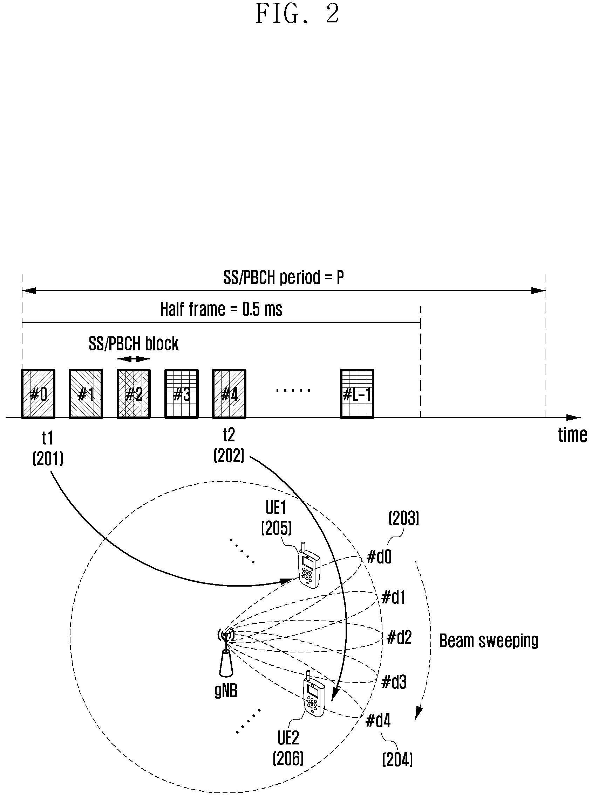

FIG. 2 illustrates an example of a time domain mapping structure of a synchronization signal and a beam sweeping operation.

The following components may be defined for description.

- Primary synchronization signal (PSS): indicates a signal that is a reference of time/frequency synchronization and provides some information of a cell ID.
- Secondary synchronization signal (SSS): is a reference of time/frequency synchronization and provides some pieces of the remaining information of the cell ID. In addition, the SSS serves as a reference signal for demodulation of a PBCH.
- Physical broadcast channel (PBCH): provides a master information block (MIB) that is necessary system information required for transmitting and receiving a data channel and a control channel by the UE. The necessary system information may include search space-related control information indicating radio resource mapping information of a control channel, scheduling control information for a separate data channel for transmitting system information, and a system frame number (SFN) corresponding to a frame unit index that is a timing reference.
- Synchronization signal/PBCH block (SS/PBCH block or SSB): is constituted by N OFDM symbols and includes a combination of a PSS, an SSS, and a PBCH. In the case of a system to which the beam-sweeping technology is applied, the SS/PBCH block is the minimum unit to which beam-sweeping is applied. In the 5G system, N may be 4. The BS may transmit a maximum of L SS/PBCH blocks, and the L SS/PBCH blocks may be mapped within a half frame (0.5 ms). The L SS/PBCH blocks are periodically repeated in units of a predetermined period P. The BS may inform the UE of the period P through signaling. When there is no separate signaling for the period P, the UE applies a pre-appointed default value.

Referring to FIG. 2, FIG. 2 illustrates an example where the beam sweeping is applied in units of SS/PBCH blocks according to the passage of time. In the example of FIG. 2, user equipment (UE) #1 205 receives an SS/PBCH block through a beam radiated in direction #d0 203 by beamforming applied to SS/PBCH block #0 at a time point t1 201. UE #2 206 receives an SS/PBCH block through a beam radiated in direction #d4 204 by beamforming applied to SS/PBCH block #4 at a time point t2 202. The UE may acquire an optimal synchronization signal from a gNB through a beam radiated in a direction at which the UE is located. For example, UE #1 205 may have difficulty in acquiring time/frequency synchronization and necessary system information from the SS/PBCH block through the beam radiated in direction #d4, far away from the location of UE #1.

In addition to the initial access procedure, the UE may receive the SS/PBCH block in order to determine whether a radio link quality of a current cell is maintained to be higher than or equal to a predetermined level. Further, during a handover procedure in which the UE moves from the current cell to an adjacent cell, the UE may receive an SS/PBCH block of the adjacent cell in order to determine a radio link quality of the adjacent cell and acquire time/frequency synchronization of the adjacent cell.

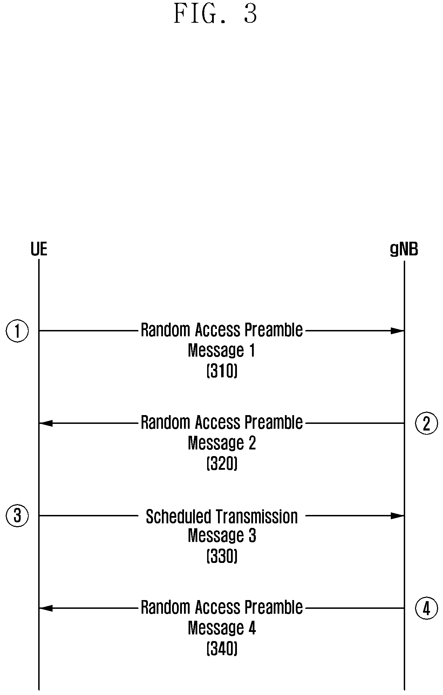

After acquiring the MIB and system information from the gNB through the initial access procedure, the UE may perform a random access procedure to switch the link with the gNB to a connected state (or an RRC_CONNECTED state). When the random access procedure is completed, the UE switches to the connected state, and one-to-one communication between the UE and the gNB becomes possible. Hereinafter, the random access procedure is described with reference to FIG. 3.

FIG. 3 illustrates an example of the random access procedure.

Referring to FIG. 3, in a first step 310 of the random access procedure, a UE transmits a random access preamble to a gNB. In the random access procedure, the random access preamble corresponding to an initial transmission message may be referred to as message 1. The gNB may measure a transmission delay value between the UE and the gNB from the random access preamble and achieve uplink synchronization. At this time, the UE may randomly select a random access preamble to be used from a random access preamble set given in advance by system information. Initial transmission power of the random access preamble may be determined according to pathloss between the gNB and the UE, measured by the UE. Further, the UE may determine a transmission beam direction of a random access preamble from the synchronization signal received from the gNB and transmit the random access preamble.

In a second step 320, the gNB transmits an uplink transmission timing control command to the UE, based on a transmission delay value measured from the random access preamble received in the first step 310. Further, the gNB may transmit an uplink resource and power control command to be used by the UE as scheduling information. Control information for an uplink transmission beam of the UE may be included in the scheduling information.

When the UE does not receive a random access response (RAR) (or message 2) which is scheduling information for message 3 from the gNB within a predetermined time in the second step 320, the first step 310 may be performed again. When the first step 310 is performed again, the UE may increase transmission power of the random access preamble by a predetermined step and transmit the random access preamble (power ramping), so as to increase a random access preamble reception probability of the gNB.

In a third step 330, the UE transmits uplink data (message 3) including a UE ID to the gNB through an uplink data channel (physical uplink shared channel (PUSCH)) using the uplink resources allocated in second step 320. Transmission timing of the uplink data channel for transmitting message 3 may follow a timing control command received from the gNB in the second step 320. Transmission power of the uplink data channel for transmitting message 3 may be determined in consideration of the power control command received from the gNB and a power ramping value of the random access preamble in the second step 320. The uplink data channel for transmitting message 3 may be an initial uplink data signal which the UE transmits to the gNB after the UE transmits the random access preamble.

When it is determined that the UE performs random access without any collision with another UE, the gNB may transmit data (message 4) including the ID of the UE transmitting the uplink data in the third step 330 to the corresponding UE in a fourth step 340. When receiving a signal transmitted by the gNB from the gNB in the fourth step 340, the UE may determine that the random access is successful. The UE may transmit HARQ-ACK information indicating whether message 4 is successfully received to the gNB through an uplink control channel (physical uplink control channel (PUCCH)).

When the data that the UE transmitted in the third step 330 collides with the data of another UE and thus the gNB fails in reception of a data signal from the UE, the gNB may not transmit data to the UE anymore. When the UE does not receive data transmitted in the fourth step 340 from the gNB within a predetermined time, the UE may determine random access procedure failure and start the first step 310 again.

When the random access procedure is successfully completed, the UE switches to the connected state, and one-to-one communication between the UE and the gNB becomes possible. The gNB may receive a report on UE capability information from the UE in the connected state and control scheduling with reference to the UE capability information of the corresponding UE. The UE may inform the gNB of information indicating whether the UE itself supports a predetermined function, a maximum allowable value of the function supported by the UE, and the like through the UE capability information. Accordingly, the UE capability information that each UE reports to the gNB may be a different value for each UE.

For example, as the UE capability information, the UE may report UE capability information including at least some of the following control information to the gNB.

- Control information related to frequency bands supported by UE
- Control information related to channel bandwidth supported by UE
- Control information related to maximum modulation scheme supported by UE
- Control information related to maximum number of beams supported by UE
- Control information related to maximum number of layers supported by UE
- Control information related to CSI reporting supported by UE
- Control information indicating whether UE supports frequency hopping
- Control information related to bandwidth when carrier aggregation (CA) is supported
- Control information indicating whether cross carrier scheduling is supported when carrier aggregation is supported

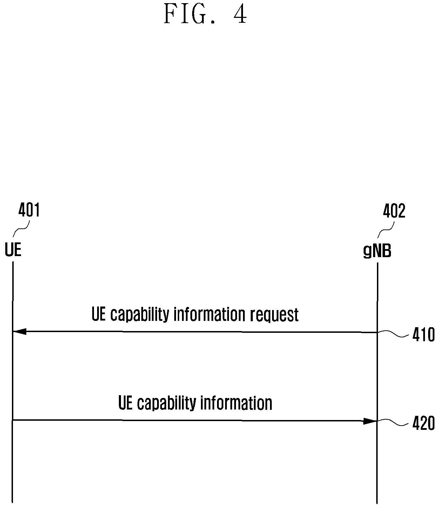

FIG. 4 illustrates an example of a procedure in which a UE reports UE capability information to a gNB.

Referring to FIG. 4, a gNB 402 may transmit a UE capability information request message to a UE 401 in process 410. According to the UE capability information request from the gNB, the UE transmits UE capability information to the gNB in process 420.

The UE connected to the gNB through the process is a UE in an RRC_CONNECTED state and may perform one-to-one communication. Contrary to this, the UE that is not connected to the gNB is in an RRC_IDLE state, and operations of the UE in the corresponding state are divided as follows.

- Perform UE-specific discontinuous reception (DRX) cycle configured by a higher layer
- Receive paging message from core network
- Acquire system information
- Perform neighboring cell-related measurement operation and cell reselection

In the 5G system, in order to reduce energy and time consumed for initial access of the UE, a UE in a new state such RRC_INACTIVE is defined. The RRC_INATIVE UE performs the following operations in addition to the operations performed by the RRC IDLE UE.

- Store access stratum (AS) information required for cell access
- Perform UE-specific DRX cycle operation configured by RRC layer.

- Configure and periodically update a RAN-based notification area (RNA) that can be used for handover by RRC layer
- Monitor RAN-based paging message transmitted through I-RNTI

Hereinafter, a scheduling method indicating transmission of downlink data from the gNB to the UE or transmission of uplink data from the UE is described.

Downlink control information (DCI) is control information that the gNB transmits to the UE through the downlink and may include downlink data scheduling information or uplink data scheduling information for a predetermined UE. In general, after independently perform channel coding on DCI for each UE, the gNB may perform transmission to each UE through a physical downlink control channel (PDCCH) corresponding to a downlink physical control channel.

The gNB may apply a predetermined DCI format to a UE to be scheduled according to the purposes, such as whether the data is scheduling information for downlink data (downlink assignment), whether the data is scheduling information for uplink data (uplink grant), or whether the data is DCI for power control, and operate the UE.

The gNB may transmit downlink data to the UE through a physical downlink shared channel (PDSCH) corresponding to a physical channel for downlink data transmission. The gNB may inform the UE of the scheduling information, such as the detailed mapping location of the PDSCH in time and frequency domains, a modulation scheme, HARQ-related control information, and power control information, through DCI related to downlink data scheduling information among DCI transmitted through the PDCCH.

The UE may transmit uplink data to the gNB through a physical uplink shared channel (PUSCH) corresponding to a physical channel for uplink data transmission. The gNB may inform the UE of the scheduling information, such as the detailed mapping location of the PDSCH in time and frequency domains, a modulation scheme, HARQ-related control information, and power control information, through DCI related to uplink data scheduling information among DCI transmitted through the PDCCH.

Time-frequency resources to which the PDCCH is mapped may be referred to as a control resource set (CORESET). The CORESET may be configured in all or some of the frequency resources of the bandwidth supported by the UE in the frequency domain. The control resource set may be configured as one or a plurality of OFDM symbols in the time domain, which may be defined as a control resource set (CORESET) duration. The gNB may configure one or a plurality of CORESETs in the UE through higher-layer signaling (for example, system information, a master information block (MIB), or radio resource control (RRC) signaling). Configuring the CORESET in the UE may mean providing information, such as a CORESET identity, a frequency location of the CORESET, and a symbol length of the CORESET. Information that the gNB provides to the UE in order to configure the CORSET may include at least some of the information shown in [Table 4].

[Table 4]

```
ControlResourceSet ::=              SEQUENCE {
    controlResourceSetId                ControlResourceSetId,
    (CORESET ID)
    frequencyDomainResources        BIT STRING (SIZE (45)),
    (frequency domain resources)
    duration                            INTEGER (1..maxCoReSetDuration),
    (CORESET duration)
    cce-REG-MappingType                 CHOICE {
    (CCE-to-REG mapping type)
        interleaved                         SEQUENCE {
            reg-BundleSize              ENUMERATED {n2, n3, n6},
            (REG bundle size)
            interleaverSize         ENUMERATED {n2, n3, n6},
            (interleaver size)
            shiftIndex                  INTEGER(0..maxNrofPhysicalResourceBlo
1)          OPTIONAL -- Need S
            (interleaver shift)
        },
        nonInterleaved                      NULL
    },
    precoderGranularity                 ENUMERATED  {sameAsREG-bun
allContiguousRBs},
    (precoding unit)
    tci-StatesPDCCH-ToAddList               SEQUENCE(SIZE   (1..maxNrofT
StatesPDCCH)) OF TCI-StateId OPTIONAL, -- Cond NotSIB1-initialBWP
    (QCL configuration information)
    tci-StatesPDCCH-ToReleaseList           SEQUENCE(SIZE    (1..maxNrofT
```

StatesPDCCH)) OF TCI-StateId OPTIONAL, -- Cond NotSIB1-initialBWP

    (QCL configuration information)

     tci-PresentInDCI              ENUMERATED  {enabl

OPTIONAL, -- Need S

    (QCL indicator configuration information within DCI)

     pdcch-DMRS-ScramblingID          INTEGER  (0..655

OPTIONAL, -- Need S

    (PDCCH DMRS scrambling ID)

   }

The CORESET may be constituted by $N_{RB}^{\overline{CORESET}}$ RBs in the frequency domain $N_{symb}^{CORESET} \in \{1,2,3\}$ symbols in the time domain. A NR PDCCH may be and constituted by one or a plurality of control channel elements (CCEs). One CCE may be constituted by six resource element groups (REGs), and the REG may be defined as one RB during one OFDM symbol. In REGs in one CORESET, REG indexes, starting at REG index 0, may be assigned in a time-first order from the lowest RB in a first OFDM symbol of the CORESET.

An interleaved scheme and a non-interleaved scheme may be supported for a PDCCH transmission method. The gNB may configure whether to perform interleaving or non-interleaving transmission for each CORESET in the UE through higher-layer signaling. Interleaving may be performed in units of REG bundles. The REG bundle may be defined as a set of one or a plurality of REGs. The UE may determine a CCE-to-REG mapping scheme in the corresponding CORESET as a scheme shown in [Table 5] below, based on the information indicating whether to perform interleaving or non-interleaving transmission configured by the gNB.

[Table 5]

| |
|---|
| The CCE-to-REG mapping for a control-resource set can be interleaved or non-interleaved and is described by REG bundles:<br><br>   - REG bundle $i$ is defined as REGs $\{iL, iL + 1,..., iL + L - 1\}$ where $L$ is the REG bundle size, $i = 0,1, ...,$ $N_{REG}^{CORESET}/L - 1$, and $N_{REG}^{CORESET} = N_{RB}^{CORESET} N_{symb}^{CORESET}$ is the number of REGs in the CORESET<br><br>   - CCE $j$ consists of REG bundles $\{f(6j/L), f(6j/L + 1),...,[(6j/L + 6/L - 1)\}$ where $f(\cdot)$ is an interleaver<br>For non-interleaved CCE-to-REG mapping, $L = 6$ and $f(x) = x$.<br><br>For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined <u>by</u><br>$$f(x) = (rC + c + n_{\text{shift}}) \bmod \left(N_{REG}^{CORESET}/L\right)$$<br>$$x = cR + r$$<br>$$r = 0,1,...,R - 1$$<br>$$c = 0,1, ..., C - 1$$<br>$$C = N_{REG}^{CORESET}/(LR)$$<br>where $R \in \{2,3,6\}$. |

The gNB may inform the UE of information on a symbol to which the PDCCH is mapped within the slot and configuration information, such as a transmission period, through signaling.

A search space of the PDCCH is described below. The number of CCEs required to transmit the PDCCH may be 1, 2, 4, 8, or 16 according to an aggregation level (AL), and the different numbers of CCEs may be used for link adaptation of the downlink control channel. For example, in the case of AL=L, one downlink control channel may be transmitted through L CCEs. The UE performs blind decoding of detecting a signal in the state in which the UE is not aware of information on the downlink control channel, and a search space indicating a set of CCEs may be used therefor. The search space is a set of downlink control channel candidates including CCEs for which the UE should attempt decoding at the given aggregation level, and there are several aggregation levels at which one set of CCEs is configured by 1, 2, 4, 8, and 16 CCEs, so that the UE may have a plurality of search spaces. The search space set may be defined as a set of search spaces at all configured aggregation levels.

The search spaces may be classified into a common search space (CSS) and a UE-specific search space (USS). UEs in a predetermined group or all UEs may search for a common search space of the PDCCH in order to receive cell-common control information such as dynamic scheduling for system information (system information block (SIB)) or paging messages. For example, the UE may receive scheduling allocation information of the PDSCH for receiving system information by searching for the common search space of the PDCCH. In the case of the common search space, UEs in a predetermined group or all UEs should receive the PDCCH, so that the common search space may be defined as a set of pre-appointed CCEs. Scheduling allocation information for the UE-specific PDSCH or PUSCH may be received by searching for a UE-specific search space of the PDCCH. The UE-specific search space may be UE-specifically defined by a UE identity (ID) and a function of various system parameters.

The gNB may configure configuration information of the search space of the PDCCH in the UE through higher-layer signaling (for example, SIB, MIB, or RRC signaling). For example, the gNB may configure, in the UE, the number of PDCCH candidates at each aggregation level L, a monitoring period of the search space, a monitoring occasion in units of symbols within the slot for the search space, a search space type (a common search space or a UE-specific search space), a combination of a DCI format and an RNTI to be monitored in the corresponding search space, and a CORESET index for monitoring the search space. For example, parameters for the search space of the PDCCH may include information shown in [Table 6] below.

[Table 6]

| |
|---|
| SearchSpace ::=                         SEQUENCE {<br><br>    searchSpaceId                         SearchSpaceId,<br>    (search space ID)<br>    controlResourceSetId                         ControlResourceS<br>OPTIONAL,      -- Cond SetupOnly<br>    (CORESET ID)<br>    monitoringSlotPeriodicityAndOffset CHOICE { |

(monitoring slot level period and offset)

| | |
|---|---|
| sl1 | NULL, |
| sl2 | INTEGER (0..1), |
| sl4 | INTEGER (0..3), |
| sl5 | INTEGER (0..4), |
| sl8 | INTEGER (0..7), |
| sl10 | INTEGER (0..9), |
| sl16 | INTEGER (0..15), |
| sl20 | INTEGER (0..19), |
| sl40 | INTEGER (0..39), |
| sl80 | INTEGER (0..79), |
| sl160 | INTEGER (0..159), |
| sl320 | INTEGER (0..319), |
| sl640 | INTEGER (0..639), |
| sl1280 | INTEGER (0..1279), |
| sl2560 | INTEGER (0..2559) |

}

OPTIONAL,    -- Cond Setup

duration                                    INTEGER              (2..25

OPTIONAL,    -- Need R

(monitoring duration)

monitoringSymbolsWithinSlot              BIT  STRING  (SIZE  (

OPTIONAL,    -- Cond Setup

(monitoring symbol location within slot)

nrofCandidates              SEQUENCE {

(number of PDCCH candidates for each aggregation level)

aggregationLevel1              ENUMERATED {n0, n1, n2, n4, n5, n6, n8},

aggregationLevel2              ENUMERATED {n0, n1, n2,

```
n4, n5, n6, n8},
            aggregationLevel4              ENUMERATED {n0, n1, n2,
n4, n5, n6, n8},
            aggregationLevel8              ENUMERATED {n0, n1, n2,
n4, n5, n6, n8},
            aggregationLevel16             ENUMERATED {n0, n1, n2,
n4, n5, n6, n8}
        }
OPTIONAL,      -- Cond Setup
    searchSpaceType                     CHOICE {
    (search space type)
        common                          SEQUENCE {
        (common search space)
            dci-Format0-0-AndFormat1-0      SEQUENCE {
                ...
            }
OPTIONAL,      -- Need R
            dci-Format2-0                   SEQUENCE {
                nrofCandidates-SFI              SEQUENCE {
                    aggregationLevel1               ENUMERAT
{n1, n2}      OPTIONAL,      -- Need R
                    aggregationLevel2               ENUMERAT
{n1, n2}      OPTIONAL,      -- Need R
                    aggregationLevel4               ENUMERAT
{n1, n2}      OPTIONAL,      -- Need R
                    aggregationLevel8               ENUMERAT
{n1, n2}      OPTIONAL,      -- Need R
                    aggregationLevel16              ENUMERAT
{n1, n2}      OPTIONAL       -- Need R
```

```
                        },
                        ...
                    }
OPTIONAL,     -- Need R
                dci-Format2-1                        SEQUENCE {
                    ...
                }
OPTIONAL,     -- Need R
                dci-Format2-2                        SEQUENCE {
                    ...
                }
OPTIONAL,     -- Need R
                dci-Format2-3                        SEQUENCE {
                    dummy1                                ENUMERAT
{sl1, sl2, sl4, sl5, sl8, sl10, sl16, sl20}    OPTIONAL,     -- Cond Setup
                    dummy2                                ENUMERAT
{n1, n2},
                    ...
                }
OPTIONAL       -- Need R
            },
            ue-Specific                        SEQUENCE {
            (UE-specific search space)
                dci-Formats                            ENUMERAT
{formats0-0-And-1-0, formats0-1-And-1-1},
                ...,

            }
        }
```

```
OPTIONAL      -- Cond Setup2

}
```

The gNB may configure one or a plurality of search space sets in the UE according to configuration information. According to some embodiments, the gNB may configure search space set 1 and search space set 2 in the UE. The UE may be configured to monitor a DCI format A scrambled by an X-RNTI in the common search space in search space set 1 and to monitor a DCI format B scrambled with a Y-RNTI in the UE-specific search space in search space set 2.

According to configuration information, there may be one or a plurality of search space sets in the common search space or the UE-specific search space. For example, search space set #1 and search space set #2 may be configured as common search spaces, and search space set #3 and search space set #4 may be configured as UE-specific search spaces.

In the common search space, the UE may monitor the following combinations of DCI formats and RNTIs. Of course, the combinations are not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the UE may monitor the following combinations of DCI formats and RNTIs. Of course, the combinations are not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may comply with the following definition and purpose.

Cell RNTI (C-RNTI): used for UE-specific PDSCH or PUSCH scheduling
Temporary cell RNTI (TC-RNTI): used for UE-specific PDSCH scheduling
Configured Scheduling (CS)-RNTI: used for semi-statically configured UE-specific PDSCH scheduling
Random access RNTI (RA-RNTI): used for PDSCH scheduling at random access stage
Paging RNTI (P-RNTI): used for PDSCH scheduling through which paging is transmitted
System information RNTI (SI-RNTI): used for PDSCH scheduling through which system information is transmitted
Interruption (INT)-RNTI: used for indicating whether puncturing is performed for PDSCH
Transmit power control for (TPC)-PUSCH-RNTI: used for indicating PUSCH power control command
Transmit power control for (TPC)-PUCCH-RNTI: used for indicating PUCCH power control command
Transmit power control for (TPC)-SRS-RNTI: used for indicating SRS power control command
The DCI formats described above may comply with the definition shown in [Table 7] below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbols) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

A CORESET p and a search space at an aggregation level L in a search space set s may be expressed as shown in the following equation.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} \right) mod \left\lfloor N_{CCE,p}/L \right\rfloor \right\} + i$$

- L: aggregation level
- nci: carrier index
- $N_{CCE,p}$: total number of CCEs existing within CORESET p
- $n^{\mu}_{s,f}$: slot index
- $M^{(L)}_{p,s,max}$: number of PDCCH candidates at aggregation level L
- $m_{snCI} = 0, ..., M^{(L)}_{p,s,max} -1$: PDCCH candidate index at aggregation level L
- i = 0, ..., L-1
-

$$Y_{p,n_{s,f}^{\mu}} = (A_p \cdot Y_{p,n_{s,f}^{\mu}-1}),$$

$$Y_{p,-1} = n_{RNTI} \neq 0$$

,

$$A_0 = 39827$$

,

$$A_1 = 39829$$

,

$$A_2 = 39839$$

,

$$D = 65537$$

- $n_{RNTI}$: UE identifier

$Y_{p,n_{s,f}^{\mu}}$ may correspond to 0 in the case of the common search space. $Y_{p,n_{s,f}^{\mu}}$ may correspond to a value varying depending on a UE ID (a C-RNTI or an ID configured in the UE by the gNB) and a time index in the case of the UE-specific search space.

As described above, signal transmission and reception in an ultra-wide bandwidth of tens to hundreds of MHz or several GHz are supported to achieve an ultra-high speed data service reaching several Gbps in the 5G system. The signal transmission and reception in the ultra-wide bandwidth may be supported through a single component carrier (CC) or supported through carrier aggregation (CA) technology of combining a plurality of component carriers. When a mobile communication service provider does not secure the frequency of the enough bandwidth to provide the ultra-high speed data service as the single component carrier, the carrier aggregation technology may increase a sum of frequency bandwidths by combining respective component carriers having relatively small bandwidth sizes and, as a result, make the ultra-high speed data service possible.

In another method of supporting the ultra-high speed data service, a data rate may be increased through a spatial multiplexing method using a plurality of transmission and reception antennas. In general, in proportion to the number of transmission antennas included in the gNB or the UE, the number of required power amplifiers (PAs) increases. The maximum output of the gNB and the UE depends on a power amplifier characteristic, and the maximum output of the gNB generally varies depending on the size of a cell covered by the gNB. In general, the maximum output is expressed in units of dBm. The maximum output of the UE is generally 23 dBm or 26 dBm.

As an example of the commercial 5G BS, the gNB may include 64 transmission antennas in a frequency band of 3.5 GHz and 64 power amplifiers corresponding thereto, and may operate with a bandwidth of 100 MHz. As a result, in proportion to the output of the power amplifier and an operation time of the power amplifier, energy consumption of the gNB may increase. Compared to the LTE BS, the 5G BS has a relatively high operation frequency band and is characterized by a wide bandwidth and many transmission antennas. Such a characteristic has an effect of increasing a data rate but incurs the cost of increased energy consumption of the gNB. Accordingly, as the number of gNBs constituting the mobile communication network is larger, the entire energy consumption of the mobile communication network increases in proportion thereto.

As described above, energy consumption of the gNB largely depends on the power amplifier operation. Since the power amplifier is involved in the operation of transmission of the gNB, downlink (DL) transmission operation of the gNB is highly associated with energy consumption of the gNB. The uplink (UL) reception operation of the gNB does not account for a relatively large portion of the energy consumption of the gNB. Physical channels and physical signals that the gNB transmits through the downlink are described below.

- Physical downlink shared channel (PDSCH): indicates a downlink data channel including data to be transmitted to one or a plurality of UEs.
- Physical downlink control channel (PDCCH): indicates a downlink control channel including scheduling information for a PDSCH and a physical uplink control channel (PUSCH). Alternatively, the PDCCH may transmit control information such as a slot format and a power control command independently without any PDSCH or PUSCH for scheduling. The scheduling information includes information on resources to which the PDSCH or the PUSCH is mapped, HARQ-related information, and power control information.
- Physical broadcast channel (PBCH): is a downlink broadcast channel that provides a master information block (MIB) which is necessary system information required for transmitting and receiving a data channel and a control channel by the UE.
- Primary synchronization signal (PSS): indicates a signal that is a reference of time/frequency synchronization and provides some information of a cell ID.
- Secondary synchronization signal (SSS): is a reference of DL time and/or frequency (hereinafter, referred to as time/frequency) synchronization and provides some pieces of the remaining information of the cell ID.
- Demodulation reference signal (DM-RS): indicates a reference signal for channel estimation by the UE for each of a PDSCH, a PDCCH, and a PBCH.
- Channel-state information reference signal (CSI-RS): indicates a downlink signal that is a reference of downlink channel state measurement by the UE.
- Phase-tracking reference signal (PT-RS): indicates a downlink signal for phase tracking.

In a viewpoint of reduction in gNB energy, when the gNB stops the downlink transmission operation, the power amplifier operation also stops, and thus an energy reduction effect of the gNB may increase and operations of the remaining gNB devices such as not only the power amplifier but also a baseband device decrease, so that the energy can be additionally saved. Similarly, even though the uplink reception operation accounts for a relatively small portion of the total energy consumption of the gNB, an additional energy saving effect can be obtained if the uplink reception operation is stopped.

The downlink transmission operation of the gNB basically depends on an amount of downlink traffic. For example, there is no data to be transmitted to the UE through the downlink, the gNB does not need to transmit the PDSCH or the PDCCH for scheduling the PDSCH. Alternatively, when the transmission can be postponed for a while because the data is not sensitive to transmission delay, the gNB may not transmit the PDSCH and/or the PDCCH. For convenience of description, a method of reducing gNB energy consumption by not transmitting or properly controlling the PDSCH and/or the PDCCH associated with data traffic is called "gNB energy saving method 1-1".

Contrary to this, physical channels and physical signals such as a PSS, a SSS, a PBCH, and a CSI-RS have characteristics of repeated transmission on a predetermined period regardless of data transmission to the UE. Accordingly, although the UE receives no data, the UE may continuously update downlink time/frequency synchronization, a downlink channel state, and a radio link quality. That is, the PSS, the SSS, the PBCH, and the CSI-RS necessarily need downlink transmission regardless of downlink data traffic, and accordingly cause gNB energy consumption. Accordingly, it is possible to achieve gNB energy saving by controlling transmission of the signal irrelevant to (or less relevant to) the data traffic to be less frequently generated (hereinafter, referred to as "gNB energy saving method 1-2").

Through "gNB energy saving method 1-1" and "gNB energy saving method 1-2", it is possible to maximize an energy saving effect of the gNB by stopping or minimizing the operation of the power amplifier of the gNB and the operation of a relevant RF device and a baseband device during a time interval in which the gNB perform no downlink transmission.

In another method, gNB energy consumption may be reduced by turning off some of the antennas or the power amplifiers of the gNB (switch-off) (hereinafter, referred to as "gNB energy saving method 2"). In this case, as a reaction to the energy saving effect of the gNB, an adverse effect such as a cell coverage reduction or a throughput reduction may occur. For example, when the gNB including 64 transmission antennas in the frequency band of 3.5 GHz described above and 64 power amplifiers corresponding thereto and operating with the bandwidth of 100 MHz activates only 4 transmission antennas and 4 power amplifiers and switches off the remaining transmission antennas and power amplifiers during a predetermined time interval in order to save gNB energy, the gNB energy consumption during the corresponding time interval is reduced to about 1/6 (=4/64), but it becomes difficult to achieve cell coverage and throughput when the existing 64 antennas and power amplifiers are assumed due to a reduction in maximum transmission power and a reduction in a beamforming gain.

Hereinafter, gNB energy saving methods proposed in the disclosure is described through detailed embodiments.

<First embodiment>

In the first embodiment, a gNB state is divided for gNB energy saving and operations of the gNB and the UE during state switching (state transition) are described.

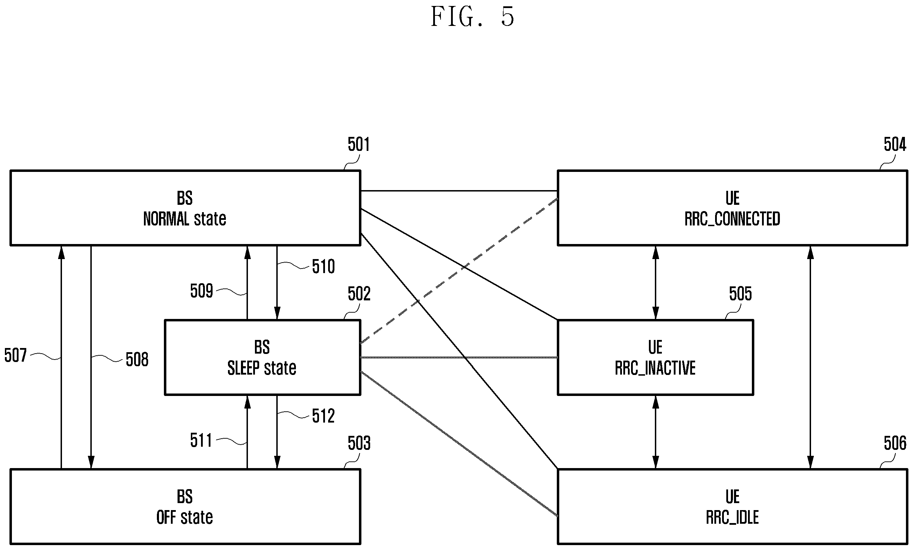

FIG. 5 illustrates state transition of the BS and the UE and the relationship between the BS state and the UE state. The BS state may be largely divided into a NORMAL state 501, a SLEEP state 502, and an OFF state 503 according to an amount of used resources and transmitted channels. A BS state in which the normal BS operation is performed is referred to as the NORMAL state. A BS state in which only some of the normal BS operations are performed to save BS energy is referred to as the SLEEP state. At this time, the SLEEP state of the BS may be divided into a plurality of sleep modes according to an operation range configuration of the BS. A mode in which the BS consumes only standby power without any operation in order to save BS energy is referred to as the OFF state. Since the BS transmits no system information while the BS operates in the OFF state, the UE cannot search for the corresponding BS operating in the OFF state during a cell search. The names of the NORMAL state 501, the SLEEP state 502, and the OFF state 503 are only examples, and names that express states of the BS may vary.

The states of the UE illustrated in FIG. 5 are the same as UE states that can be defined in the 5G system. While a RRC_CONNECTED UE 504 completes an initial access procedure and can perform one-to-one communication with the BS, a RRC_INACTIVE UE 505 or a RRC_IDLE UE 506 mainly performs an operation of receiving cell common control information such as system information or a paging message of the BS. Since channels which can be transmitted and received are limited according to UE states, the UE states can be described in connection with the BS states.

For example, in FIG. 5, operations of the RRC_CONNECTED UE, the RRC INACTIVE UE, and the RRC_IDLE UE can be all supported when the BS is in the NORMAL state, but the operation of the RRC_CONNECTED UE may not be supported according to an operation configured in the BS when the BS is in the SLEEP state. When the BS does not support transmission and reception of a data channel such as the PDSCH during the SLEEP state, the BS in the SLEEP state cannot support the operation of the RRC_CONNECTED UE. Further, when the BS is in the OFF state, no signal is transmitted and received from the UE, the BS supports no operation of the UE.

When the BS operates in the SLEEP state and the OFF state except for the NORMAL state among the BS states illustrated in FIG. 5, the BS may further save energy compared to the operation in the NORMAL state.

When the BS is in the OFF state, energy can be saved the most, but initial access of UEs around the BS is restricted and thus the corresponding UEs may be connected to a further BS or a cell search is not smoothly performed since there is no BS around the UEs.

The BS operating in the SLEEP state less influences the performance of UEs and may reduce energy of the BS. "BS energy saving method 1-1", "BS energy saving method 1-2", or "BS energy saving method 2" that has been described above may be one example of the BS when the BS is in the SLEEP state. The BS in the SLEEP state may use only some of the resources used by the BS or support only some of the existing transmission and reception channels, thereby reducing energy of the BS. The size of energy that can be saved varies depending on an operation mode within the SLEEP state of the BS.

UEs around the BS operating in the SLEEP state may be connected to the corresponding BS, but the operation of the BS is limited, and thus the performance of the UEs, such as throughput and latency, may deteriorate. Accordingly, in general, the amount of energy that the BS saves and the performance of the UE may have the trade-off relationship. When the BS switches the SLEEP state or the OFF state or switches to another sleep mode within the SLEEP state to change the operation of the BS in order to save energy, the state should be switched not to influence the performance of the UE on the basis of the number of RRC _CONNECTED UEs and RRC INACTIVE UEs and an amount of data traffic. For example, the case where the BS suddenly switches to the OFF state while the RRC _CONNECTED UE performs one-to-one communication may have a bad influence on the performance of the UE and thus should be avoided.

Further, in order to reduce energy consumption of the UEs, the operation of the BS according to the SLEEP state may be notified to adjacent UEs. The RRC _CONNECTED UE connected to the BS operating in the NORMAL state performs blind decoding within a plurality of search spaces given to the UE including a UE-specific search space to receive a PDCCH. When the state of the BS switches to the SLEEP state in which only information related to the PDCCH received in a common search space such as system information or a paging message is transmitted in the NORMAL state, the corresponding UE may consume energy during a process of performing unnecessary blind decoding in search spaces other than the common search space if the UE is not aware of the state switching of the BS. Accordingly, when the state switching of the BS is signaled in advance to adjacent UEs, the UE may reduce energy consumption by excluding blind decoding in search spaces other than the common search space such as the UE-specific search space.

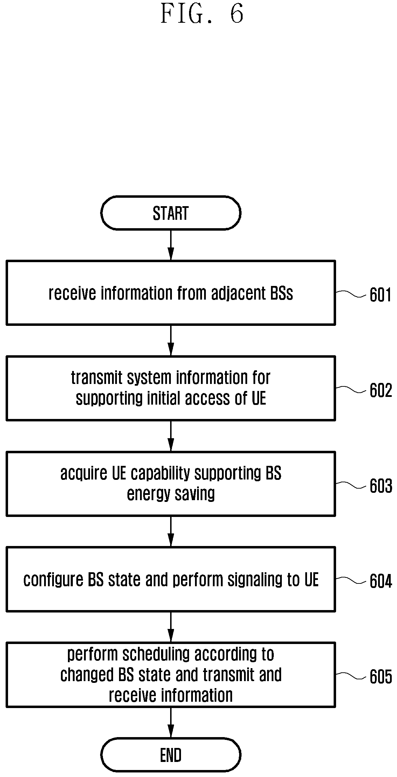

FIGS. 6 to 9 illustrate procedures required when the BS switches to another state. The case where the BS switches the state is divided into process 507 and process 512 in FIG. 5.

FIG. 6 illustrates a procedure of the BS during a BS state switching process in operations 507 and 511 of FIG. 5. Operations 507 and 511 correspond to the case where the BS in the OFF state switches to the NORMAL state or the SLEEP state, and FIG. 6 illustrates a procedure required when the BS switches from a state in which any channel is not transmitted/received to a state in which all or some of the operations are performed again.

In process 601, the BS may receive information on UEs from adjacent BSs before switching from the OFF state to another state. In process 601, the information on the UEs which the BS receives from the adjacent BSs may include information that helps in determining a state of the BS to be switched, such as the number of UEs connected to the adjacent BSs and an amount of data traffic. When the amount of data traffic of the adjacent BS is large and the number of UEs in the RRC _CONNECTED state or RRC _INACTIVE state is large, the BS may determine switching to the NORMAL state. Contrary to this, when the amount of data traffic predicted after the state switching is small, the BS may switch to the SLEEP state. Further, when the amount of data traffic of the adjacent BSs is large and thus it is difficult to support UEs, the adjacent BSs may make a request for switching the BS in the OFF state to the SLEEP state or the NORMAL state. When there is no BS connected to the BS in the OFF state or there is not UE-related information to be received, process 601 can be omitted.

In process 602, the BS transmits channels for supporting initial access of the UE. UEs which desire to switch the link with the BS to the connected state or UEs that determine a radio link quality of the adjacent cell and desire to acquire time/frequency synchronization may acquire cell-common transmission/reception control information through a SS/PBCH block and additional system information transmitted by the BS. For example, the UE may receive SS/PBCH transmission-related information such as a period of the SS/PBCH block, the number of SS/PBCH blocks through SIB1. Before receiving separate signaling for the corresponding information, the UE may receive the SS/PBCH block by a pre-appointed default value.

In process 602, UEs that desire to switch the link with the BS to the connected state perform a random access procedure, and when the corresponding procedure is completed, the BS receives a report on UE capability information from the UE and determines whether the corresponding UE can perform an appropriate operation according to BS state switching in process 603. Specifically, the UE capability information which the BS received from the UE may include information indicating whether the UE can recognize signaling related to BS state switching or BS sleep mode switching, control information related to a frequency band supported by the UE, and control information related to a channel bandwidth. Further, when there is no UE attempting random access, the BS may change information related to SS/PBCH transmission to save energy of the BS and perform process 602 or may switch back to the OFF state. For example, in process 602, the SS/PBCH is initially transmitted according to a period of 80 ms and, when there is no UE attempting random access, transmission may be performed according to a period of 320 ms or the state may be switched back to the OFF state to stop SS/PBCH transmission.

Based on the information on the UE acquired in process 601 and process 603, the BS may configure whether to operate in the NORMAL state or the SLEEP state in process 604. The state in which the BS currently operates may be configured in the UE through RRC signaling.

In process 605, the BS performs scheduling and an information transmission/reception operation according to the configuration in the changed state. When the UE successfully acquires the state of the BS in process 604, the UE may accurately recognize the operation of the BS by changing the configuration of the UE according to the state of the BS. At this time, the UE may reduce energy consumption by operating only in signals and resources transmitted and received by the BS.

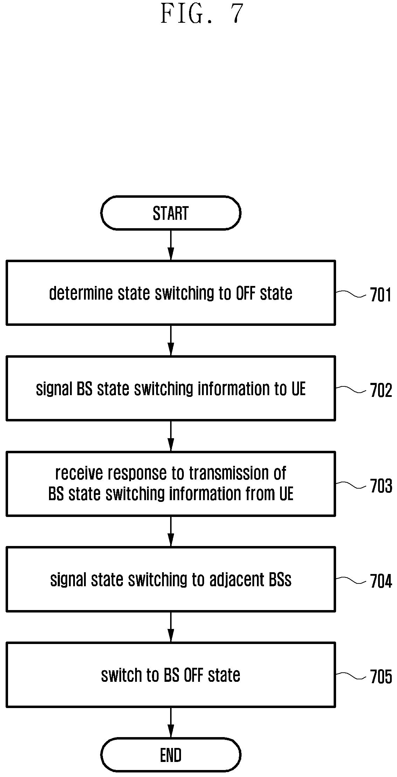

FIG. 7 illustrates a procedure of the BS during a BS state switching process in operations 508 and 512 of FIG. 5. Operations 508 and 512 correspond to the case where the BS operates in the NORMAL state or the SLEEP state and then switches to the OFF state, and FIG. 7 describes a procedure required before the BS operates and then switches to the OFF state in which no channel is transmitted and received.

In process 701, the BS may consider state switching to the OFF state when there is no data traffic. Specifically, when there is no UE in the RRC _CONNECTED state and no UE attempting random access for a long time, the BS may determine state switching to the OFF state. At this time, in order to support seamless data transmission and reception of the UE, state switching of the BS to the OFF state is not considered when there is a UE in the RRC _CONNECTED state. When switching is unavoidable, handover to another adjacent BS may be supported to achieve seamless data transmission and reception. Accordingly, in general, when there are only UEs in the RRC_INACTIVE state and UEs in the RRC_IDLE state, the BS may consider state switching to the OFF state.

When state switching of the BS to the OFF state is determined in process 701, the BS signals information on the state switching of the BS to the UE in process 702. The state switching information may include information on the state to which the BS desires to switch and timing information indicating a time point at which the state switching starts. The state switching information may be signaled through a PDCCH or signaled to the UE through a SIB related to a BS state configuration. A detailed signaling method that can be supported for each UE may vary depending on an RRC state of the UE and a UE capability.

In response to the BS state switching information signaling transmitted in process 702, the UE in the RRC _CONNECTED state or the UE in the RRC _INACTIVE state may inform, through response information, the BS of whether the state switching information of the BS is received, and the BS may receive the response information transmitted by the UE in process 703. When the UE fails in signaling reception related to the state switching information of the BS, the BS may retransmit the state switching information of the BS for the corresponding UE. However, since the process of receiving the response from the UE and performing retransmission consumes energy of the BS and thus the corresponding process may be omitted according to a configuration of the BS.

In process 704, the BS performing the state switching may transmit signaling for informing of its own state switching to adjacent BSs. As described above, the BS performing the state switching may inform its own state to the adjacent BSs, so as to help other BSs in efficiently predicting traffic and managing resources for each UE. Further, when the BS should handover a specific UE, the BS may transfer information on the corresponding UE to another BS to be connected, in order to support the connection to the adjacent BS. The corresponding process may be omitted in some cases including the case where there is no adjacent BS to which the state switching signaling of the BS is transmitted.

In process 705, the BS switches to the OFF state after state switching timing notified through signaling to the UEs and adjacent BSs The BS having switched to the OFF state may switch to the NORMAL state or the SLEEP state after a time random designated by the corresponding BS according to the procedure of FIG. 6 described above or through a request from the adjacent BS.

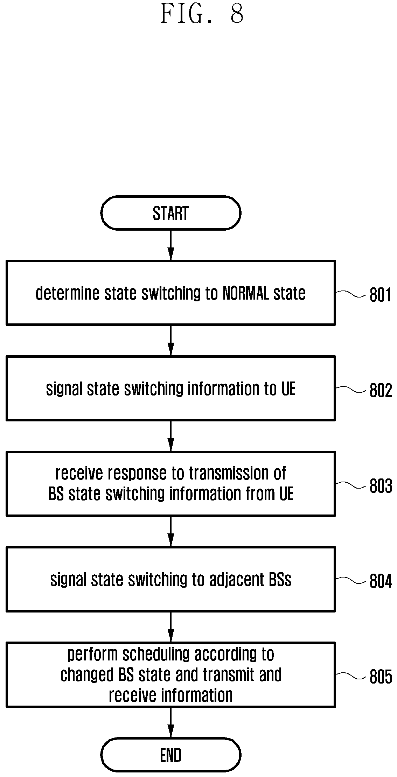

FIG. 8 illustrates a procedure of the BS during the BS state switching process of process 509 in FIG. 5. Process 509 indicates a procedure in which the BS operates in the SLEEP state and then switches to the NORMAL state to save energy.

When the BS desires to switch to a state in which a normal BS operation is performed for the reason corresponding to an increase in an amount of data traffic or the number of RRC _CONNECTED UEs or RRC_INACTIVE UEs, the BS may determine to switch the state to the NORMAL state. A reference of switching the state to the NORMAL state may vary depending on an operation of the SLEEP state configured by the BS. For example, the BS may be configured to perform only an operation of transmitting only a SS/PBCH, system information, and a paging message in the SLEEP state according to a predetermined period. Since the BS transmits only cell-common control information while the BS operates in the SLEEP state, the RRC _CONNECTED UE that is connected to the BS to perform one-to-one communication may not be supported. However, RRC_INACTIVE UEs and RRC_IDLE UEs around the BS may attempt random access by using information transmitted from the BS while the BS operates in the SLEEP state. In this case, when at least one UE successfully completes the random access and thus switches to the RRC _CONNECTED UE, it may be determined to switch also the state of the BS to the NORMAL state in order to support one-to-one communication of the RRC _CONNECTED UE. In cases other than the case where a type of a channel that the BS should transmit and receive is changed, the BS may determine to switch the state to the NORMAL state if the number of resources used by the BS in the SLEEP state configured by the BS is insufficient and the insufficient resources influence the performance of the UE.

In process 802, the BS may signal the state switching information to the UE. At this time, the BS may signal the state switching to all UEs through a cell-common control signal or may signal the state switching only to one specific UE having the largest data traffic or only to a plurality of UEs having data traffic larger than equal to a predetermined level, which make a difference in the operation between UEs. Due to the difference between state switching signaling, the operation when the BS is in the SLEEP state may be maintained and thus energy consumption may decrease without separate configuration switching of the UE having relatively small data traffic. In process 802, BS state switching signaling may include information indicating that the BS will operate in the NORMAL state and information on state switching timing. However, exceptionally, timing information may be omitted in the case where the BS state switching is performed earlier than a signaling time point. In process 802, the UEs receiving the state switching signaling of the BS may transmit a response signal of the signaling to the BS.

In process 803, the BS may know whether the operation configuration of each UE has switched according to the state of the BS, based on whether there are responses from the UEs and the content of the responses. When process 803 is omitted and a response to the signaling is not received from the UEs, the UE does not transmit and receive information according to the operation of the BS configured in the NORMAL state, and thus resources of the BS are wasted and energy is consumed. For example, even though the BS in the NORMAL state makes a request for reporting a channel state, based on a CSI-RS transmitted in resources that are not configured in the SLEEP state, the UE operating according to the SLEEP state does not perform a channel measurement operation requested by the BS and thus cannot report the channel state.

Particularly, when the RRC _CONNECTED UE fails in reception of the BS state switching information, the BS may retransmit the state switching information or make the UE recognize the BS state switching by using semistatic signaling rather than dynamic signaling. Alternatively, when channel transmission and reception required for even the operation of the UE configured in the SLEEP state of the BS are possible, the BS state switching signaling may not performed anymore and scheduling according to the operation and resources of the UE may be supported.

In process 804, the BS may inform, through signaling, adjacent BSs that its own state will switch. The BS may inform the adjacent BSs that the BS operates in the NORMAL state, thereby helping other adjacent BSs in determining whether to switch to the SLEEP state or the OFF state. The corresponding process may be omitted according to cases.

After the BS state switching timing informed to the UE in process 802, the BS switches to the NORMAL state and operates in the NORMAL state in process 805. This is the same as the normal BS operations, and UEs receiving the BS state switching signaling operate according to a parameter configured by the BS. Other UEs which are not connected to the BS can be connected to the BS through initial access and random access.

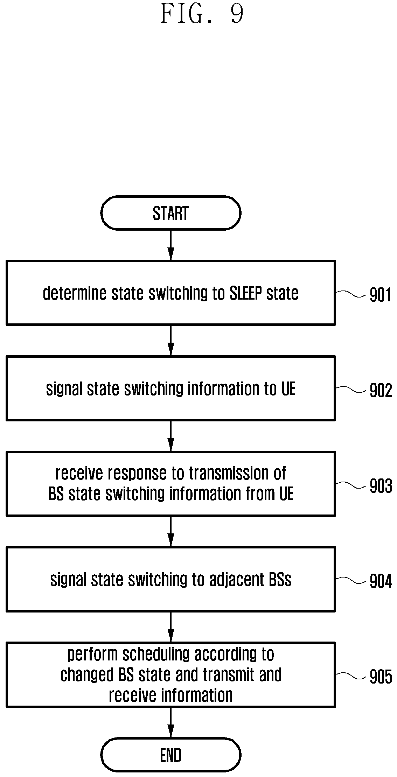

FIG. 9 illustrates a procedure of the BS during the BS state switching process in process 510 of FIG. 5. Process 510 indicates a procedure in which the BS operates in the NORMAL state and then switches to the SLEEP state to save energy.

When resources required for channel transmission and reception decrease or the number channels that should be transmitted and received decreases for the reason that an amount of data traffic decreases and thus system load is small or the number of RRC _CONNECTED UEs or the RRC _INACTIVE UEs decreases, the BS may determine to switch the state to the SLEEP state in process 901. A reference of switching the state to the SLEEP state may vary depending on an operation of the SLEEP state configured by the BS. For example, the BS may be configured to perform only an operation of transmitting only a SS/PBCH, system information, and a paging message in the SLEEP state according to a predetermined period. Since the BS transmits only cell-common control information while the BS operates in the SLEEP state, the RRC _CONNECTED UE that is connected to the BS to perform one-to-one communication may not be supported. Accordingly, the BS may determine to switch to the SLEEP state only when there is no RRC_CONNECTED UE or when the RRC_CONNECTED UE is scheduled to switch to the RRC INACTIVE or RRC IDLE UE.

In process 902, the BS may signal the state switching information to the UE. At this time, the BS may signal the state switching to all UEs in order to reduce unnecessary energy consumption of the UE. At this time, the state switching signaling by the BS may be performed preferentially through a cell-common control signal in order to reduce signaling overhead of the BS.

In processor 902, the BS state switching signaling may include information indicating that the BS will operate in the SLEEP state and information on state switching timing. However, exceptionally, timing information may be omitted in the case where the BS state switching is performed earlier than a signaling time point. The information indicating that the BS will operate in the SLEEP state may include information indicating which mode is executed among several sleep modes that can be configured in the SLEEP state. In process 902, the UEs receiving the state switching signaling of the BS may transmit a response signal of the signaling to the BS.

In process 903, the BS may know whether the operation configuration of each UE has switched according to the state of the BS, based on whether there are responses from the UEs and the content of the responses. The process of receiving the response to the state switching signaling of the BS and performing retransmission since the UE has not properly performed the reception consumes energy, and thus process 903 may be omitted according to the configuration of the SLEEP state of the BS to be switched. When process 903 is omitted and no response to the signaling is received from the UEs, the UE which did not properly receive the state switching signaling from the BS may experience energy consumption due to the unnecessary operation.

In process 904, the BS may inform, through signaling, adjacent BSs that its own state will switch. The BS may inform adjacent BSs of its own operation in the SLEEP state and its own operation in the SLEEP state to be switched, thereby helping other adjacent BSs in determining whether to switch states. The corresponding process may be omitted according to cases.

After the BS state switching timing informed to the UE in process 902, the BS switches to the SLEEP state and operates in the SLEEP state in process 905. When the BS is in the NORMAL state, the UE receiving signaling or UEs recognizing the operation of the BS in the SLEEP state through system information for the operation state of the BS operate according to a configured parameter. UEs which are not connected to the BS can be connected to the BS through initial access and random access. However, when a cell barring status is identified through a MIB corresponding to necessary system information of the BS, UEs which are not connected to the BS may not perform random access to the corresponding BS.

The steps in FIGs. 6 to 9 described above can be omitted, orders thereof may be changed, or steps that are not mentioned may be added to implement the disclosure.

<Second embodiment>

The second embodiment describes a method of configuring a BS state in the UE and a detailed method of performing signaling to the UE during BS state switching in order to save BS energy.

State switching lists of the BS to which signaling can be applied described in the second embodiment include state switching lists of the BS described in the first embodiment, but are not limited thereto.

The BS may configure parameters related to the operation of the BS, such as a list of transmitted or monitored channels, a period of a periodically transmitted signal, the size of frequency resources, or the like, according to the sleep mode of the SLEEP state. In order to reduce unnecessary energy consumption of the UE and properly adapt the operation of the BS to improve the performance, the UE should also recognize a change in the operation according to state switching of the BS. In the following description, state switching of the BS is referred to as not only state switching distinguished in FIG. 5 but also state switching between a plurality of sleep modes distinguished in the SLEEP state.

In the existing 5G system, there is a method of instructing the UE to change resources configured in the UE through RRC signaling or to omit transmission and reception of a specific channel that the UE should perform whenever a channel transmitted and received by the BS, used resource allocation, or the like is changed, in order to make the UE operate in accordance with the operation change according to BS state switching. However, an operation configuration change through RRC signaling takes much time and thus is not dynamically applied, which makes it difficult to respond immediately to BS state switching. Since methods indicating omission of transmission and reception of a specific channel that the UE should perform vary depending on a channel type and a separate indication should be needed for each channel, it takes much signaling overhead to adapt the operation of the UE to BS state switching.

In order to efficiently adapt the operation of the UE according to BS state switching with small signaling overhead, a list of states in which the BS can operate in the SLEEP state or parameter value candidates related to the SLEEP state may be configured. The following description is made for methods of configuring information on states in which the BS can operate for the UE connected to the BS.

- Method A: method A is a method of configuring together a sleep mode in which the BS in the SLEEP state can operate and operation parameter configuration values of the BS in the corresponding sleep mode. For example, when the number of sleep modes in which the BS can operate in the SLEEP state is 3, the respective sleep modes may be classified as follows and may be configured in the UE together with corresponding operation parameter configuration values.

  ▪ First sleep mode

  • The BS transmits only a channel related to cell-common control information
  • Transmit a channel according to a period of P 1, for example, P 1 = 320 ms
  • Operate with a frequency bandwidth B 1, for example, B1 = 5 MHz

  ▪ Second sleep mode

  • The BS transmits and receives a channel related to cell-common control information and a channel (for example, URLLC-related channel) related to rapid service provision
  • Cell-common control information transmits a channel according to a period of P1, and is transmitted when there is data in the case of a URLLC channel
  • Operate in a frequency bandwidth B2, for example, B2 = 10 MHz

▪ Third sleep mode

- The BS transmits and receives a channel identically in the NORMAL state
- Transmit and receive a channel every period of P2 and operate in the OFF state in the other periods, for example, P2 = 40 ms
- The BS uses B3 corresponding to a part of the available entire frequency bandwidth, for example, B3 = 40 MHz

Through the method A, the state of the BS and the operation of the BS according to the corresponding state may be explicitly configured in the UE. When the state of the BS is configured according to the method A, it is possible to reduce an amount of information that should be transmitted during a signaling process by signaling only information on a state ID of the BS to be switched and state switching timing when the state switching of the BS is signaled. However, when the BS should change the operation for a specific BS state, the operation may be changed through RRC signaling, and it takes time to change a configuration value. Further, the maximum number of states that the BS can configure may be limited.

- Method B: method B is a method of presenting parameter value candidates that can be configured when the BS is in the SLEEP state as a set without explicitly configuring the state of the BS. Parameter candidates related to the SLEEP state may be configured in the UE as follows.

▪ Classify transmission and reception channels

- The BS transmits only a channel related to cell-common control information
- The BS transmits and receives a channel related to cell-common control information and a channel related to rapid service provision
- The BS transmits and receives a channel equally in the NORMAL state

▪ BS operation period

- Transmit a periodic signal every period of P1
- Transmit a periodic signal every period of P1 and transmit a rapid service provision-related signal when necessary
- Transmit and receive a channel every P2 and operate in OFF state in other periods

▪ Frequency bandwidth

- B1
- B2
- B3

Through the method B, configuration value candidates related to the operation of the BS in the SLEEP state may be presented to the UE. When the state of the BS is configured according to the method B, not only information on state switching timing but also information indicating which value corresponds to the operation to be performed in each candidate when the state switching of the BS is signaled. Accordingly, as the number of types of classified parameters is larger and the number of candidate values per parameter is larger, an amount of information that should be signaled increases. However, since the BS state is not explicitly defined, the UE may operate to adapt to various BS states executed by a combination of configured parameter values, and thus the number of states in which the BS can operate may become larger than the method A.

At this time, through the method A and the method B, information on a detailed time for each configuration value in the BS operation configuration and a location in frequency resources may be specified together with the parameter configuration, or a resource mapping method may be separately presented. The BS operation-related parameter list and detailed configuration are only for an example and are not limited to the presented list and value. The method is for information that can be configured when the UE is connected to the BS, and information on a list of states in which the BS can operate cannot be known before the UE, such as the UE in the RRC_IDLE state, is connected to the BS. However, it may be identified, through system information or the like, what state the BS is operating in through cell-common control information.

Information related to the NORMAL state of the BS is not separately configured, and the NORMAL state may be executed based on a parameter value related to the BS operation configured through RRC signaling in the existing 5G system. The OFF state is a state in which any channel is not transmitted and received, and thus a separate configuration is not needed.

State switching signaling of the BS should be received in common by UEs connected to the corresponding BS or UEs monitoring system information of the corresponding BS. Accordingly, the BS may signal information on the state in which the BS can operate so that not only the RRC_CONNECTED UE which can receive various types of downlink control signals but also the UE in the RRC_IDLE state or the UE in the RRC_INACTIVE state can acquire state information of the BS. Further, since the UEs receive common information, it may be considered to perform signaling using a cell-common control signal by which cell-related information is broadcasted to adjacent UEs or a UE-group control signal by which UEs belonging to one group can receive the same control signal, rather than performing signaling using a UE-specific control signal for controlling one UE.

State switching signaling of the BS may be performed through a PDCCH, and a detailed signaling method may be divided as follows according to a RNTI value used for PDCCH transmission.

- BS state control signaling through PDCCH including DCI scrambled by SI-RNTI: the BS may receive DCI scrambled by a SI-RNTI and acquire resource allocation information of a PDSCH containing SIB information. When the UE successfully receives the PDSCH, based on the received DCI, the UE may acquire system information included in the corresponding SIB. The SIB is assigned a number, such as SIB 1, SIB 2, and the like according to the type of included system information, and the remaining system information except for SIB 1 is referred as other system information (OSI). The OSI is mainly periodically transmitted, and OSI transmission-related information is configured through SIB 1. At this time, a SIB including BS state information may be defined and broadcasted to adjacent UEs. In the following description, a SIB including BS state information is referred to a SIB X.

- BS state control signaling through PDCCH including DCI scrambled by newly introduced BS state-related RNTI: a new DCI format containing BS state control information may be defined and a RNTI for identifying the corresponding DCI may be newly introduced to rapidly adapt the UE to BS state switching. In the following description, an identifier indicating BS state switching-related control information is referred to as a state transition RNTI (ST-RNTI). The ST-RNTI has a common value that is given to UEs connected to the BS in order to reduce BS signaling overhead, and a BS state control signal using the ST-RNTI may be cell-commonly signaled. As mentioned in process 802, when the BS supports the case in which BS state switching is signaled to only some UEs having much traffic, a state transition group RNTI (STG-RNTI) that can be configured in common in some UEs may be separately designated. At this time, the BS state switching control information can be acquired through PDCCH information alone, rather than receiving the PDSCH, based on the content of the received PDCCH, and thus the UE may more rapidly acquire BS state control information and adapt to the BS operation, thereby reducing energy consumption.

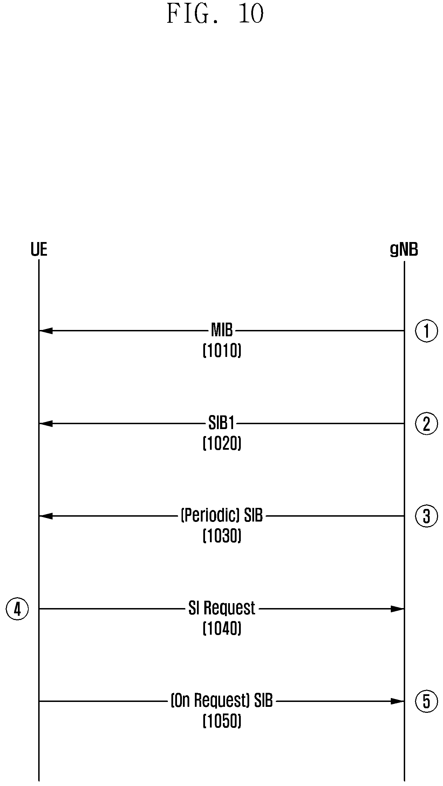

FIG. 10 is a diagram illustrating a procedure in which the UE acquires system information of the BS through a SIB. The UE may acquire a MIB and SIB1 in processes 1010 and 1020 through a SS/PBCH periodically transmitted by the BS. The BS periodically broadcasts SIBs except for SIB 1 to adjacent UEs through process 1030. At this time, the BS may also broadcast system information SIB X related to the state of the BS to the adjacent UEs, and the UE having a capability of distinguishing BS states to operate may acquire the corresponding system information and adapt to the BS state to operate. Further, the UE which does not receive system information SIB X related to the state of the BS may make a request for the system information to the BS in process 1040. A method of transmitting the request is configured through SIB 1. When the UE makes a request for information on the state to the BS, the BS transmits the corresponding system information to the UE in process 1050. Through the procedure of FIG. 10, not only the RRC_CONNECTED UE but also the RRC_INACTIVE UE and the RRC_IDLE UE may acquire information on the state of the BS.

When BS state switching is signaled through a ST-RNTI or a STG-RNTI, BS state control information may include the following information. However, state control information that can be included is not limited to the following information.

- Information on a state of the BS to be switched: may be constituted by identifier information corresponding to the BS state to be switched when the state of the BS is configured through the method A. The BS state information may be constituted by value information to be configured for each BS state-related parameter list when the BS state is configured through the method B. At this time, the information may be constituted to include only information on a parameter item that is changed without including a value of a parameter item that is not changed during state switching.

- BS state switching timing information: may include information on a time at which BS state switching is performed.

- Response information on signaling: the corresponding information may be selectively included when a response to reception of BS signaling should be made.

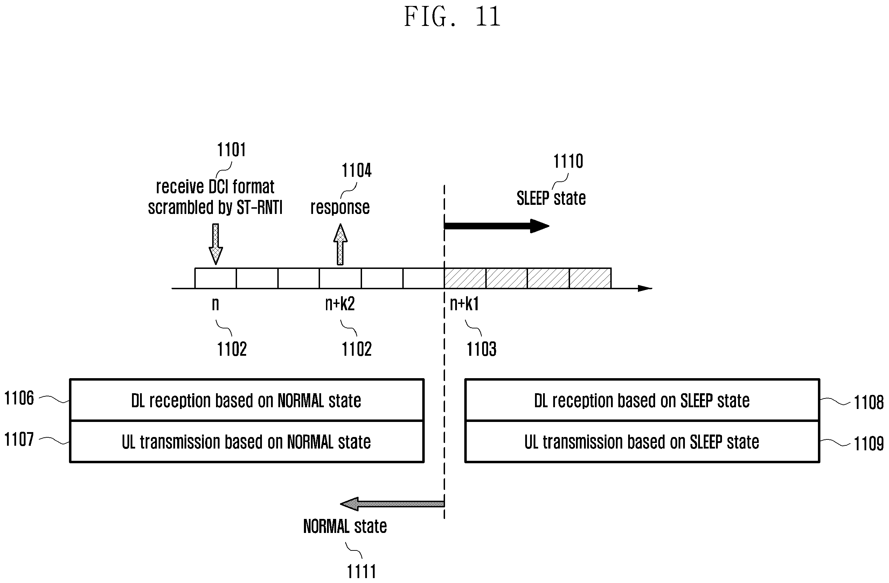

FIG. 11 is a diagram illustrating an example of the operation of the UE when signaling of switching the state of the BS from the NORMAL state to the SLEEP state is performed through DCI scrambled by a ST-RNTI.

According to FIG. 11, the UE receives DCI scrambled by a ST-RNTI (hereinafter, referred to "ST-DCI") 1101 from the BS in a slot n 1102. The "ST-DCI" includes BS state switching timing information, and the UE applies the state of the BS as a SLEEP state 1110 in a slot n+k1 1103 after a predetermined processing time k1 for acquiring the signal and processing a relevant operation and performs an operation corresponding to downlink reception 1108 and uplink transmission 1109 according to the SLEEP state after the corresponding slot. Accordingly, the UE performs the operation according to a NORMAL state 1111 before the slot n+k1 before the BS state switching is applied. That is, the UE performs the operation of the downlink reception 1106 and the uplink transmission 1107 according to the NORMAL state before n+k1.

When the BS indicates a response to reception of the state control, the UE transmits a response 1104 to a slot n+k2 1105 after a predetermined processing time k2 for processing a relevant operation. When the BS does not receive the response 1104 from the UE, the BS may recognize that the corresponding UE has not acquired state switching control information.

On the other hand, all of the cases where the BS switches from the SLEEP state to the NORMAL state or switches the sleep mode within the SLEEP state follow the same scheme as that in FIG. 11.

<Third embodiment>

The third embodiment describes a method of specifically distinguishing the SLEEP state among the BS states in order to save BS energy. The operation in the SLEEP state of the BS described in the third embodiment may be an example of the BS operation in the SLEEP state or in the sleep mode within the SLEEP state specified in the first embodiment and the second embodiment.

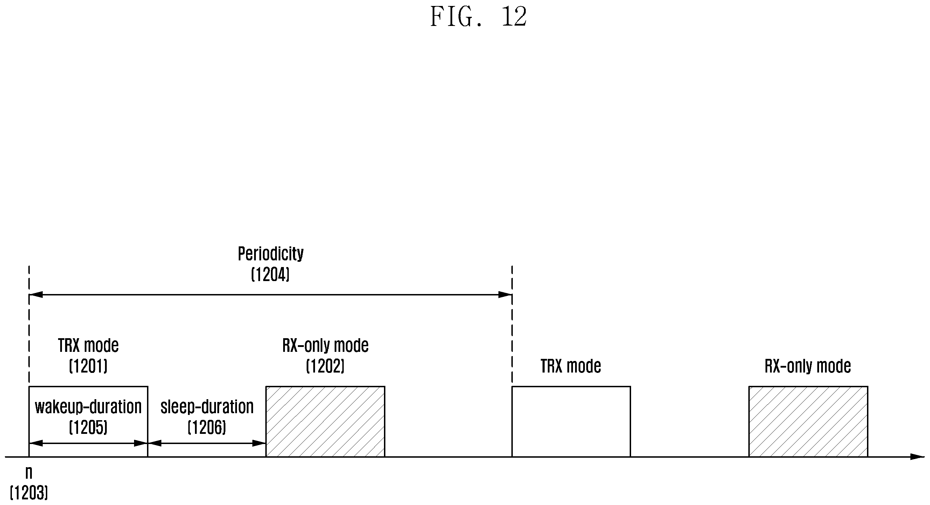

FIG. 12 illustrates an example of the BS operation in the sleep mode. In order to save BS energy, the BS may perform a discontinuous transmission and reception (DTRX) operation for transmitting and receiving data information and control information according to a predetermined period. The DTRX operation may be divided into a transmission and reception mode (TRX mode) 1201 for performing both transmission and reception according to an operation of the BS, a reception mode (RX-only mode) 1202 for performing only uplink reception, and a transmission mode (TX-only mode) for performing only downlink transmission. At this time, a plurality of DTRX operations may be configured in one sleep mode. FIG. 12 shows the BS operation in the sleep mode in which the transmission and reception mode and the reception mode are simultaneously configured.

A period during which the BS can transmit and receive information is determined according to a slot n 1203 in which the DTRX mode is configured, a period (periodicity) 1204 indicating the frequency of transmission and reception of information by the BS, and the time (wakeup-duration) during which the BS remains active when the BS transmits and receives information once. When the BS operates in the sleep mode, the time except for the wakeup-duration determined according to a plurality of DTRX configuration values is a sleep period (sleep-duration) 1206, and the BS does not perform any operation for the sleep duration, thereby saving energy.

The period of the DTRX operation of the BS may be configured based on a period of signals transmitted and received by the UE, and it is possible to save BS energy by applying a value larger than the existing configurable value. For example, a period of a SS/PBCH block may be configured as one of 5 ms, 10 ms, 20 ms, 40 ms, 80 ms, and 160 ms, and the period of the DTRX period may be configured as 320 ms, 640 ms, or the like that is longer than the SS/PBCH block period. Further, the sleep mode may be divided into deep sleep when the corresponding period is longer than or equal to 1280 ms and light sleep when the corresponding period is equal to or shorter than 640 ms.

Signals which can be received when the BS operates in the transmission and reception mode or the reception mode may be a PRACH, a scheduling request, a control channel such as a PUCCH, and an uplink data channel such as a PUSCH, and the type of channels which can be received in the transmission and reception mode or the reception mode may be limited by the BS. Similarly, signals which can be transmitted when the BS operates in the transmission and reception mode or the transmission mode may be a SSB, a SIB, a cell-common control signal such as paging, a UE-specific control signal, and a downlink data channel such as a PDSCH, and the type of channels which can be transmitted in the transmission and reception mode or the transmission mode may be limited by the BS.

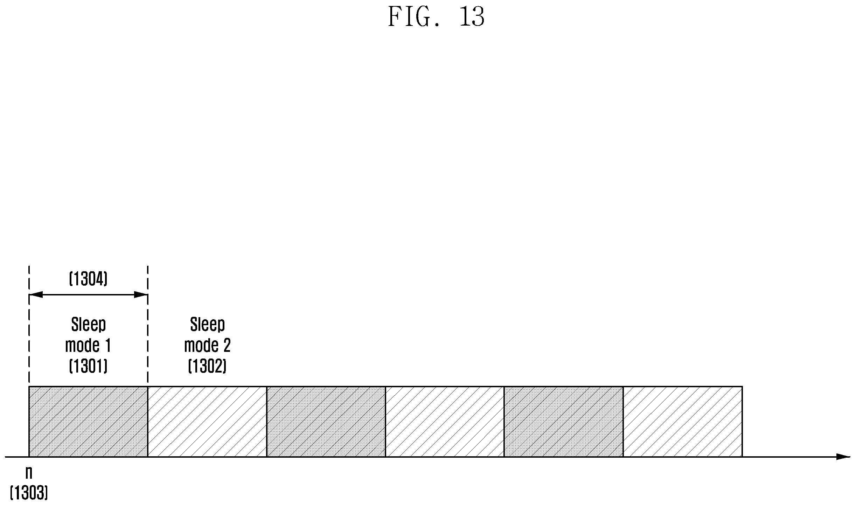

FIG. 13 illustrates an operation of periodically switching sleep modes supported by a BS. The sleep mode supported by the BS may include the sleep mode or the SLEEP state described as the example in the first embodiment and the second embodiment as well as the sleep mode described in the third embodiment.

FIG. 13 shows the case in which the BS operates through the alternative application of sleep mode 1 1301 and sleep mode 2 1302 that are differently configured. After configuring in advance information on a slot n 1303, an operation for the periodically switched sleep mode, and information on a period 1304 during which an operation of one mode continues in the UE, the BS may indicate the performance of the operation for periodically switching the sleep mode through signaling. Further, the UE may be configured to periodically switch not only the sleep mode configured in the SLEEP state but also a specific sleep mode and a NORMAL state or an OFF state. At this time, the case where the sleep mode and the OFF state are configured to be periodically switched may be the same as the case where one DTRX operation is configured in FIG. 12.

The BS may configure a state in which the operation for saving energy is performed through various methods as one sleep mode within the SLEEP state and periodically operate through the method, so as to reduce signaling overhead required for controlling state switching.

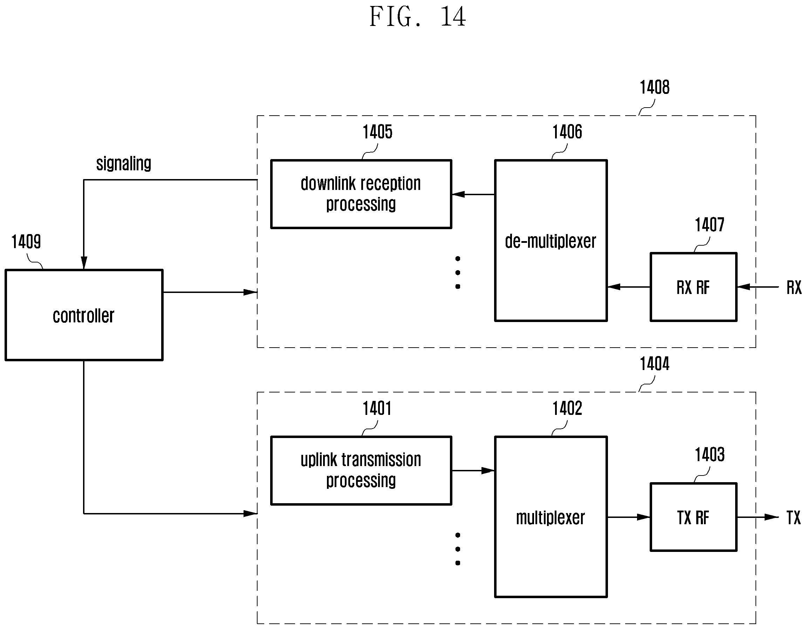

FIG. 14 illustrates an example of a UE transmission/reception device in a wireless communication system according to an embodiment of the disclosure. For convenience of description, illustration and description of devices which are not directly related to the disclosure may be omitted.

Referring to FIG. 14, a UE may include a transmitter 1404 including an uplink transmission processing block 1401, a multiplexer 1402, and a transmission RF block 1403, a receiver 1408 including a downlink reception processing block 1405, a demultiplexer 1406, and a reception RF block 1507, and a controller 1409. As described above, the controller 1409 may control component blocks of the receiver 1408 for receiving a data channel or a control channel transmitted by the BS and component blocks of the transmitter 1404 for transmitting an uplink signal.

The uplink transmission processing block 1401 of the transmitter 1404 of the UE may generate a signal to be transmitted through a process such as channel coding and modulation. The signal generated by the uplink transmission processing block 1401 may be multiplexed with another uplink signal by the multiplexer 1402, signal-processed by the transmission RF block 1403, and then transmitted to the BS.

The receiver 1408 of the UE de-multiplexes the signal received from the BS and distributes the signal to each downlink reception-processing block. The downlink reception processing block 1405 may perform a process, such as demodulation of a downlink signal of the BS and channel decoding, so as to acquire control information or data transmitted by the BS. The UE receiver 1408 may apply the output result of the downlink reception processing block to the controller 1409 and support the operation of the controller 1409.

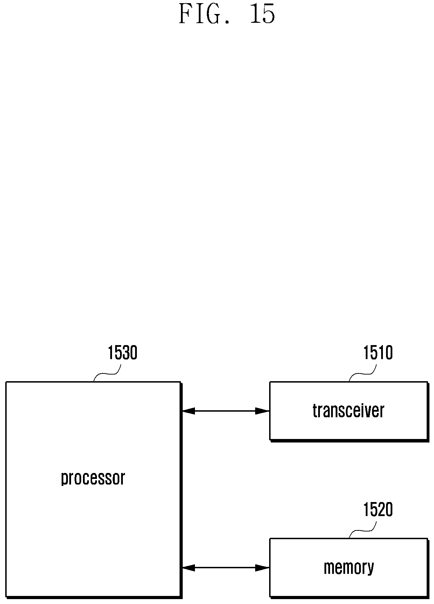

FIG. 15 is a block diagram illustrating an example of a configuration of a UE according to an embodiment of the disclosure.

As illustrated in FIG. 15, the UE of the disclosure may include a processor 1530, a transceiver 1510, and a memory 1520. However, the components of the UE are not limited thereto. For example, the UE may include more or fewer components than the components described above. Further, the processor 1530, the transceiver 1510, and the memory 1520 may be implemented in the form of a single chip. According to an embodiment, the transceiver 1510 of FIG. 15 may include the transmitter 1404 and the receiver 1408 of FIG. 14. The processor 1530 of FIG. 15 may include the controller 1409 of FIG. 14.

According to an embodiment, the processor 1530 may control a series of processes that the UE can perform according to the embodiments of the disclosure. For example, according to an embodiment of the disclosure, components of the UE may be controlled to perform a transmission/reception method of the UE according to whether a BS mode is a BS energy saving mode or a normal BS mode. The number of processors 1530 may be one or plural, and the processor 1530 may perform the transmission/reception operation of the UE in the wireless communication system to which the carrier aggregation of the disclosure is applied by executing programs stored in the memory 1520.

The transceiver 1510 may transmit and receive a signal to and from the BS. The signal transmitted and received to and from the BS may include control information and data. The transceiver 1510 may include a RF transmitter that up-converts and amplifies a frequency of a transmitted signal and a RF receiver that low-noise amplifies a received signal and down-converts a frequency. However, the transceiver 1510 is only an embodiment, and the components of the transceiver 1510 are not limited to the RF transmitter and the RF receiver. Further, the transceiver 1510 may receive a signal through a radio channel, output the signal to the processor 1530, and transmit the signal output from the processor 1530 through the radio channel.

According to an embodiment, the memory 1520 may store programs and data required for the operation of the UE. The memory 1520 may store control information or data included in the signal transmitted and received by the UE. The memory 1520 may be configured by storage media such as ROM, RAM, hard disc, CD-ROM, and DVD, or a combination of the storage media. The number of memories 1520 may be plural. According to an embodiment, the memory 1520 may store programs for performing the transmission/reception operation of the UE according to whether the BS mode is the BS energy saving mode or the normal BS mode according to the embodiments of the disclosure.

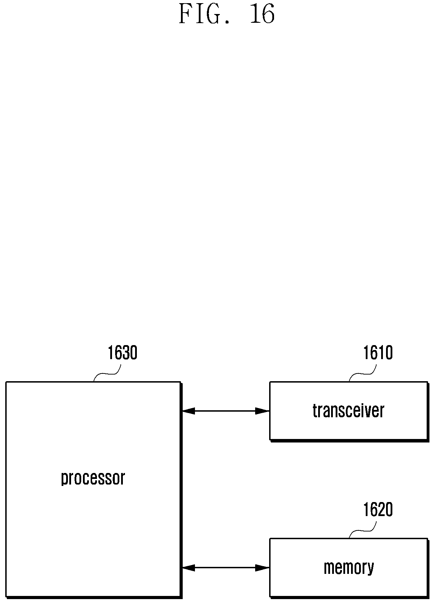

FIG. 16 is a block diagram illustrating an example of a configuration of a BS according to an embodiment of the disclosure.

As illustrated in FIG. 16, the BS of the disclosure may include a processor 1630, a transceiver 1610, and a memory 1620. However, the components of the BS are not limited thereto. For example, the BS may include more or fewer components than the components described above. Further, the processor 1630, the transceiver 1610, and the memory 1620 may be implemented in the form of a single chip.

The processor 1630 may control a series of processes so that the BS can operate according to the embodiments of the disclosure. For example, according to an embodiment of the disclosure, the components of the BS may be controlled to perform a method of scheduling the UE according to whether the BS mode is a BS energy saving mode or a normal BS mode. The number of processors 1630 may be one or plural, and the processor 1630 may perform the method of scheduling the UE according to whether the BS mode of the disclosure is the BS energy saving mode or the normal BS mode by executing programs stored in the memory 1620.

The transceiver 1610 may transmit and receive a signal to and from the UE. The signal transmitted and received to and from the UE may include control information and data. The transceiver 1610 may include a RF transmitter that up-converts and amplifies a frequency of a transmitted signal and a RF receiver that low-noise amplifies a received signal and down-converts a frequency. However, the transceiver 1610 is only an embodiment, and the components of the transceiver 1610 are not limited to the RF transmitter and the RF receiver. Further, the transceiver 1610 may receive a signal through a radio channel, output the signal to the processor 1630, and transmit the signal output from the processor 1630 through the radio channel.

According to an embodiment, the memory 1620 may store programs and data required for the operation of the BS. The memory 1620 may store control information or data included in the signal transmitted and received by the BS. The memory 1620 may be configured by storage media such as ROM, RAM, hard disc, CD-ROM, and DVD, or a combination of the storage media. The number of memories 1620 may be plural. According to an embodiment, the memory 1620 may store programs for performing the method of scheduling the UE according to the BS mode is the BS energy saving mode or the normal BS mode according to the various embodiments of the disclosure.

In the detailed embodiments of the disclosure described above, the components included in the disclosure are expressed as the singular or the plural according to the proposed detailed embodiment. However, the singular or plural expression is appropriate selection according to a situation presented for convenience of description, the disclosure is not limited to a singular component or plural components, and even components expressed as the plural may be configured as the singular and even components expressed as the singular may be configured as the plural.

Meanwhile, exemplary embodiments of the disclosure are disclosed in the specification and drawings, and although specific terms are used, they are merely used in a general sense to easily describe the technology content of the disclosure and to assist understanding of the disclosure but are not intended to limit the scope of the disclosure. It is obvious to those skilled in the art that other modified embodiments based on the technical idea of the disclosure can be implemented as well as the embodiments disclosed herein. Further, the respective embodiments may be implemented in combination with each other as necessary.

Meanwhile, while the disclosure has been shown and described with reference to certain embodiments thereof, various changes in form and details can be made therein without departing from the scope of the disclosure. Therefore, the scope of the disclosure should not be defined as being limited to the embodiments, but should be defined by the appended claims and equivalents thereof.

**Claims**

1.  A method performed by a base station (BS) in a communication system, the method comprising:

    determining a switching from a first state to a second state;
    transmitting first state switching information indicating the switching from the first state to the second state to a terminal;
    switching a state of the BS from the first state to the second state; and
    performing communication with the terminal, based on the second state.

2.  The method of claim 1, wherein a plurality of modes related to the second state and a parameter configuration corresponding to each mode are configured in the terminal, and the parameter configuration comprises configuration values for one or more BS operation-related parameters, and
    the first state switching information indicates one of the plurality of modes.

3.  The method of claim 1, wherein a candidate value for each of the one or more BS operation-related parameters is configured in the terminal, and
    the first state switching information indicates one of candidate values for each of the one or more BS operation-related parameters.

4.  The method of claim 1, further comprising, in case that a response to the first state switching information is indicated to the terminal, receiving the response to the first state switching information from the terminal.

5. The method of claim 1, wherein, in case that the first state switching information comprises information on state switching timing, switching the state of the BS from the first state to the second state after the state switching timing from a time point at which the first state switching information is transmitted to the terminal.

6. The method of claim 1, wherein the first state switching information is transmitted through a system information block (SIB) scheduled by downlink control information (DCI) scrambled by a radio network temporary identifier (RNTI) related to system information or transmitted through DCI scrambled by a RNTI related to a BS state switching.

7. The method of claim 1, further comprising:

   determining a switching from the second state to the first state;
   transmitting second state switching information indicating the switching from the second state to the first state to the terminal;
   switching the state of the BS from the second state to the first state; and
   performing communication with the terminal, based on the first state.

8. A method performed by a terminal in a communication system, the method comprising:

   receiving first state switching information indicating a switching from a first state to a second state from a base station (BS); and
   performing communication with the BS, based on the second state.

9. The method of claim 8, wherein a plurality of modes related to the second state and a parameter configuration corresponding to each mode are configured in the terminal, and the parameter configuration comprises configuration values for one or more BS operation-related parameters, and
   the first state switching information indicates one of the plurality of modes.

10. The method of claim 8, wherein a candidate value for each of the one or more BS operation-related parameters is configured in the terminal, and
    the first state switching information indicates one of candidate values for each of the one or more BS operation-related parameters.

11. The method of claim 8, further comprising, in case that a response to the first state switching information is indicated to the terminal, transmitting the response to the first state switching information to the BS.

12. The method of claim 8, wherein, in case that the first state switching information comprises information on state switching timing, communicating with the BS, based on the second state, after the state switching timing from a time point at which the first state switching information is received from the BS.

13. The method of claim 8, wherein the first state switching information is received through a system information block (SIB) scheduled by downlink control information (DCI) scrambled by a radio network temporary identifier (RNTI) related to system information or received through DCI scrambled by a RNTI related to a BS state switching

14. A base station (BS) in a communication system, the BS comprising:

   a transceiver; and
   a controller configured to:

      determine a switching from a first state to a second state;
      transmit first state switching information indicating the switching from the first state to the second state to a terminal;
      switch a state of the BS from the first state to the second state; and
      perform communication with the terminal, based on the second state.

15. A terminal in a communication system, the terminal comprising:

   a transceiver; and
   a controller configured to:

receive first state switching information indicating a switching from a first state to a second state from a base station (BS); and

perform communication with the BS, based on the second state.

# FIG. 1

Frame [114]

subframe [105]

Slot [106]

Transmission band $N_{BW}$ subcarriers [104]

$N_{sc}^{RB}$ subcarriers [110]

Resource element [112]

$N_{symb}^{slot}$ symbols [102]

Frequency

Time

# FIG. 2

# FIG. 3

UE                                                            gNB

① ──── Random Access Preamble ────▶
         Message 1
         (310)

◀──── Random Access Preamble ──── ②
         Message 2
         (320)

③ ──── Scheduled Transmission ────▶
         Message 3
         (330)

◀──── Random Access Preamble ──── ④
         Message 4
         (340)

# FIG. 4

401

UE

402

gNB

UE capability information request

410

UE capability information

420

## FIG. 5

EP 4 482 222 A1

# FIG. 6

```
         ┌──────────────┐
         │    START     │
         └──────┬───────┘
                │
                ▼
┌─────────────────────────────────┐
│  receive information from        │ ～ 601
│  adjacent BSs                    │
└──────────────┬──────────────────┘
               │
               ▼
┌─────────────────────────────────┐
│  transmit system information for │ ～ 602
│  supporting initial access of UE │
└──────────────┬──────────────────┘
               │
               ▼
┌─────────────────────────────────┐
│  acquire UE capability supporting│ ～ 603
│  BS energy saving                │
└──────────────┬──────────────────┘
               │
               ▼
┌─────────────────────────────────┐
│  configure BS state and perform  │ ～ 604
│  signaling to UE                 │
└──────────────┬──────────────────┘
               │
               ▼
┌─────────────────────────────────┐
│  perform scheduling according to │ ～ 605
│  changed BS state and transmit   │
│  and receive information          │
└──────────────┬──────────────────┘
               │
               ▼
         ┌──────────────┐
         │     END      │
         └──────────────┘
```

# FIG. 7

```
           ( START )
               |
               v
+-----------------------------------+
| determine state switching to OFF  |~ 701
| state                             |
+-----------------------------------+
               |
               v
+-----------------------------------+
| signal BS state switching         |~ 702
| information to UE                 |
+-----------------------------------+
               |
               v
+-----------------------------------+
| receive response to transmission  |
| of BS state switching information |~ 703
| from UE                           |
+-----------------------------------+
               |
               v
+-----------------------------------+
| signal state switching to         |~ 704
| adjacent BSs                      |
+-----------------------------------+
               |
               v
+-----------------------------------+
| switch to BS OFF state            |~ 705
+-----------------------------------+
               |
               v
           (  END  )
```

# FIG. 8

START

↓

determine state switching to NORMAL state — 801

↓

signal state switching information to UE — 802

↓

receive response to transmission of
BS state switching information from UE — 803

↓

signal state switching to adjacent BSs — 804

↓

perform scheduling according to
changed BS state and transmit and
receive information — 805

↓

END

# FIG. 9

```
                    ┌─────────────┐
                    │    START    │
                    └─────────────┘
                           │
                           ▼
        ┌──────────────────────────────────────┐
        │ determine state switching to SLEEP state │ ～ 901
        └──────────────────────────────────────┘
                           │
                           ▼
        ┌──────────────────────────────────────┐
        │   signal state switching information to UE │ ～ 902
        └──────────────────────────────────────┘
                           │
                           ▼
        ┌──────────────────────────────────────┐
        │     receive response to transmission of    │
        │   BS state switching information from UE   │ ～ 903
        └──────────────────────────────────────┘
                           │
                           ▼
        ┌──────────────────────────────────────┐
        │     signal state switching to adjacent BSs  │ ～ 904
        └──────────────────────────────────────┘
                           │
                           ▼
        ┌──────────────────────────────────────┐
        │     perform scheduling according to        │
        │   changed BS state and transmit and        │ ～ 905
        │            receive information             │
        └──────────────────────────────────────┘
                           │
                           ▼
                    ┌─────────────┐
                    │     END     │
                    └─────────────┘
```

FIG. 10

UE                                                          gNB

◄──────────────── MIB ────────────────                      ①
                  (1010)

◄──────────────── SIB1 ───────────────                      ②
                  (1020)

◄────────────── (Periodic) SIB ──────────                    ③
                  (1030)

④  ─────────────── SI Request ──────────────►
                  (1040)

   ─────────────── (On Request) SIB ──────────►              ⑤
                  (1050)

# FIG. 11

receive DCI format scrambled by ST-RNTI 1101

response 1104

SLEEP state 1110

n 1102

n+k2 1102

n+k1 1103

1106 DL reception based on NORMAL state

1107 UL transmission based on NORMAL state

DL reception based on SLEEP state 1108

UL transmission based on SLEEP state 1109

NORMAL state 1111

EP 4 482 222 A1

EP 4 482 222 A1

FIG. 12

# FIG. 13

FIG. 14

EP 4 482 222 A1

FIG. 15

46

FIG. 16

1630

1610

processor

transceiver

1620

memory

<div align="center">**INTERNATIONAL SEARCH REPORT**</div>

| International application No. |
| --- |
| **PCT/KR2023/005870** |

| A. | CLASSIFICATION OF SUBJECT MATTER |
| --- | --- |

**H04W 52/02**(2009.01)i; **H04W 72/23**(2023.01)i; **H04W 88/08**(2009.01)i

According to International Patent Classification (IPC) or to both national classification and IPC

| B. | FIELDS SEARCHED |
| --- | --- |

Minimum documentation searched (classification system followed by classification symbols)

H04W 52/02(2009.01); H04W 24/02(2009.01); H04W 36/38(2009.01); H04W 88/10(2009.01); H04W 88/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기지국(base station), 상태 전환(state transition), 에너지(energy)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2014-0097560 A (NEC CORPORATION) 06 August 2014 (2014-08-06) See paragraphs [0039]-[0060]; claims 6, 13 and 15; and figures 4a-7. | 1-3,5,7-10,12,14-15 |
| A | | 4,6,11,13 |
| A | KR 10-2011-0093054 A (SAMSUNG ELECTRONICS CO., LTD.) 18 August 2011 (2011-08-18) See paragraphs [0030]-[0043]; and figures 3-4. | 1-15 |
| A | KR 10-2016-0128196 A (FOUNDATION OF SOONGSIL UNIVERSITY-INDUSTRY COOPERATION) 07 November 2016 (2016-11-07) See paragraphs [0050]-[0081]; and figures 4-6. | 1-15 |
| A | KR 10-2014-0129522 A (SAMSUNG ELECTRONICS CO., LTD.) 07 November 2014 (2014-11-07) See paragraphs [0032]-[0061]; and figures 2-4. | 1-15 |
| A | KR 10-2013-0026668 A (SAMSUNG ELECTRONICS CO., LTD.) 14 March 2013 (2013-03-14) See paragraphs [0057]-[0064]; and figure 4. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 July 2023** | **24 July 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005870**

| Patent document cited in search report | | | Publication date (day/month/year) | Patent family member(s) | | | Publication date (day/month/year) |
|---|---|---|---|---|---|---|---|
| KR | 10-2014-0097560 | A | 06 August 2014 | CN | 103999519 | A | 20 August 2014 |
| | | | | CN | 103999519 | B | 29 March 2019 |
| | | | | EP | 2789194 | A1 | 15 October 2014 |
| | | | | EP | 2789194 | B1 | 24 July 2019 |
| | | | | GB | 2497918 | A | 03 July 2013 |
| | | | | JP | 2015-503251 | A | 29 January 2015 |
| | | | | JP | 5958724 | B2 | 02 August 2016 |
| | | | | US | 10021637 | B2 | 10 July 2018 |
| | | | | US | 2014-0341101 | A1 | 20 November 2014 |
| | | | | WO | 2013-084721 | A1 | 13 June 2013 |
| KR | 10-2011-0093054 | A | 18 August 2011 | US | 2011-0195741 | A1 | 11 August 2011 |
| | | | | US | 8565827 | B2 | 22 October 2013 |
| KR | 10-2016-0128196 | A | 07 November 2016 | KR | 10-1743080 | B1 | 02 June 2017 |
| KR | 10-2014-0129522 | A | 07 November 2014 | | None | | |
| KR | 10-2013-0026668 | A | 14 March 2013 | US | 2014-0185509 | A1 | 03 July 2014 |
| | | | | US | 9462551 | B2 | 04 October 2016 |
| | | | | WO | 2013-036047 | A2 | 14 March 2013 |
| | | | | WO | 2013-036047 | A3 | 02 May 2013 |

Form PCT/ISA/210 (patent family annex) (July 2022)